(19) Europäisches Patentamt / European Patent Office / Office européen des brevets

(11) **EP 4 336 961 B1**

(12) **FASCICULE DE BREVET EUROPEEN**

(45) Date de publication et mention
de la délivrance du brevet:
**08.10.2025   Bulletin 2025/41**

(51) Classification Internationale des Brevets (IPC):
***H04W 84/18*** *(2009.01)*      ***H04W 84/20*** *(2009.01)*
***H04W 88/06*** *(2009.01)*

(21) Numéro de dépôt: **23195298.7**

(52) Classification Coopérative des Brevets (CPC):
**H04W 84/18; H04W 84/20;** H04W 88/06

(22) Date de dépôt: **05.09.2023**

(54) **SYSTÈME ET PROCÉDÉ DE COMMUNICATION SANS FIL CRITIQUE POUR LA DÉTERMINATION D'UN ÉQUIPEMENT DE SUPERVISION DES LIAISONS DE COMMUNICATION SANS FIL DIRECTE**

SYSTEM UND VERFAHREN ZUR KRITISCHEN DRAHTLOSEN KOMMUNIKATION ZUR BESTIMMUNG EINER ÜBERWACHUNGSAUSRÜSTUNG FÜR DIREKTE DRAHTLOSE KOMMUNIKATIONSVERBINDUNGEN

SYSTEM AND METHOD FOR CRITICAL WIRELESS COMMUNICATION FOR DETERMINING EQUIPMENT MONITORING DIRECT WIRELESS COMMUNICATION LINKS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **08.09.2022   FR 2208974**

(43) Date de publication de la demande:
**13.03.2024   Bulletin 2024/11**

(73) Titulaire: **THALES**
**92190 Meudon (FR)**

(72) Inventeurs:
• **GIRARDEAU, Laurent**
**92622 GENNEVILLIERS CEDEX (FR)**
• **BROUET, Jérôme**
**92622 GENNEVILLIERS CEDEX (FR)**
• **SCHOLLER, Franck**
**92622 GENNEVILLIERS CEDEX (FR)**
• **MONTENOT, Jean-Marc**
**92622 GENNEVILLIERS CEDEX (FR)**
• **REBECCHI, Filippo**
**75009 PARIS (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-B1- 2 904 874        EP-B1- 2 953 393**
**US-A1- 2010 268 825     US-A1- 2019 141 495**

# Description

## Domaine technique

La présente invention concerne de manière générale le domaine des communications sans fil, et en particulier un système et un procédé de communication par redondance.

Dans les systèmes de communication sans fil dite « critique », utilisés par exemple pour des missions civiles ou militaires, il est connu d'utiliser des dispositifs de communication sans fil pouvant fonctionner selon des protocoles de communication en mode relayé, c'est-à-dire avec connexion à une infrastructure réseau, ou en mode direct (c'est-à-dire sans infrastructure réseau). Par exemple, la norme TETRA (*TErrestrial Trunked RAdio* selon l'expression anglo-saxonne correspondante), établie par l'organisme de normalisation ETSI (*European Telecommunications Standards Institute* selon l'expression anglo-saxonne correspondante), porte sur un protocole de communication radio numérique mobile bidirectionnel destiné aux services publiques tels que les services de secours, les forces de polices, les ambulances, les pompiers, les services de transport public et l'armée.

Certains systèmes de communication sans fil critique connus utilisent des dispositifs de communication comprenant un terminal dual intégrant un terminal cellulaire type 4G (mode relayé) avec un terminal radio souvent analogique (mode direct). Cependant, dans de telles solutions, une rupture de communication d'un utilisateur par rapport au reste du groupe de communication sans fil est fréquente, entrainant des pertes de transmission parfois critiques. En effet, un besoin fondamental de tels services publiques est de pouvoir communiquer en toute circonstance (sous et hors couverture réseau), par exemple pour coordonner efficacement leurs actions avec l'ensemble des membres de leur groupe de communication, ou pour transmettre un signal de détresse à au moins un membre de leur groupe de communication ou à d'autres personnes à proximité susceptibles de leur venir en aide.

En communication de groupe, chaque terminal dual peut être sous la couverture d'une infrastructure ou non, à portée d'un autre terminal dual en mode direct ou non. La situation changeant constamment en fonction de la mobilité des utilisateurs des terminaux. Les dispositifs doivent toujours pouvoir communiquer entre eux.

Aujourd'hui, il n'existe aucune solution efficace permettant de répondre aux problèmes de discontinuité de communication entre des dispositifs de communication sans fil critique, disposés sous la couverture d'une infrastructure et/ou de zones non couvertes par cette infrastructure.

Il existe ainsi un besoin pour un système (comprenant des dispositifs) et un procédé capable d'améliorer la gestion de ces communications sans fil et en particulier pour déterminer un équipement de supervision des liaisons selon le mode direct entre dispositifs.

EP 2 904 874 B1 divulgue la sélection d'un nœud maître dans un réseau D2D sur la base de la qualité de sa connexion cellulaire et sur la base du nombre et de la qualité de ses connexions directes.

## Résumé de l'invention

L'invention est définie par les revendications ci-après.

La présente invention vient améliorer la situation en proposant un système de communication sans fil critique comprenant un ensemble de $\mathcal{N}$ dispositifs de communication, un centre de communication et une infrastructure réseau configurée pour mettre en œuvre un réseau d'interconnexion. Chaque dispositif de communication de l'ensemble comprend un module de communication directe fonctionnant selon un protocole de communication directe et un module de communication relayée fonctionnant selon un protocole de communication relayée, c'est-à-dire avec connexion à une infrastructure réseau via le réseau d'interconnexion. Le module de communication relayée est associé à un état de connectivité relayée correspondant à un état de connexion du dispositif de communication de l'ensemble avec le réseau d'interconnexion. Chaque dispositif de communication de l'ensemble est en outre associé à ( $\mathcal{N}-1$ ) états de connectivité directe correspondant à un état de liaison de communication sans fil directe du dispositif de communication de l'ensemble avec chacun des autres dispositifs de communication de l'ensemble de dispositifs de communication, l'état de connectivité directe ayant une valeur binaire parmi une première valeur et une deuxième valeur, le système de communication sans fil comprenant au moins un dispositif de communication non connecté au réseau d'interconnexion et au moins un dispositif de communication connecté au réseau d'interconnexion, l'état de connectivité directe $E_{d(n \leftrightarrow h)}$, correspondant à l'état de liaison de communication sans fil directe du dispositif de communication connecté avec le dispositif de communication non connecté, étant égal à la première valeur si un dispositif de communication connecté et un dispositif de communication non connecté sont à portée radio directe. Le centre de communication est configuré pour recevoir les états de connectivité relayée et les états de connectivité directe de l'ensemble des $\mathcal{N}$ dispositifs de communication, chaque dispositif de communication connecté étant associé à un nombre d'états de connectivité directe $\chi_{d(n)}$ déterminé à partir des états de connectivité directe $\varepsilon_{d(n \leftrightarrow h)}$. Le centre de communication est en outre configuré pour sélectionner un équipement de supervision parmi l'ensemble de $\mathcal{N}$ dispositifs de communication à partir des états de connectivité relayée $\varepsilon_{r(n)}$, et des nombres d'états de connectivité directe $\chi_{d(n)}$ déterminés.

Avantageusement, l'équipement de supervision peut être un dispositif de communication connecté au réseau d'interconnexion.

Le centre de communication peut être configuré pour déterminer un score associé à chaque dispositif de communication de l'ensemble parmi une partie au moins des dispositifs de l'ensemble de dispositifs de communication, le score étant déterminé à partir de critères de détermination et étant compris entre un score maximal $PRIO_{max}$ et un score minimal $PRIO_{min}$. L'équipement de supervision peut être un dispositif de communication de l'ensemble associé au score maximal $PRIO_{max}$.

Dans des modes de réalisation, l'équipement de supervision peut être sélectionné selon une fréquence de détermination $f_d$ prédéfinie, et/ou en réponse à la mise à jour des états de connectivité relayée et/ou des états de connectivité directe.

Le nombre d'états de connectivité directe $\chi_{d(n)}$ déterminé à partir des états de connectivité directe d'un dispositif de communication connecté par rapport à un dispositif de communication non connecté peut être compris entre un nombre d'états de connectivité directe maximal $\chi_{max}$ et un nombre d'états de connectivité directe minimal $\chi_{min}$. L'équipement de supervision peut être un dispositif de communication connecté étant associé au nombre d'états de connectivité maximal $\chi_{d(n)} = \chi_{max}$.

Chaque dispositif de communication de l'ensemble peut comprendre un ensemble des ressources $R_{(n)}$ et peut être associé à une valeur de poids $\kappa_{(n)}$ déterminé à partir de l'ensemble des ressources $R_{(n)}$, la valeur de poids $\kappa_{(n)}$ étant comprise entre une valeur de poids maximale $K_{max}$ et une valeur de poids minimale $K_{min}$. L'équipement de supervision peut être un dispositif de communication connecté associé à une valeur de poids maximale $\kappa_{(n)} = K_{max}$.

Avantageusement, l'ensemble de ressources $R_{(n)}$ peut comprendre un nombre $J$ de caractéristiques physiques et/ou virtuelles

$$\mathcal{R}_{(n)}^{j},$$

, chaque caractéristique physique et/ou virtuelle

$$\mathcal{R}_{(n)}^{j}$$

étant définie en fonction d'un facteur de disponibilité

$$x_{(n)}^{j}$$

de la caractéristique associée au dispositif de communication de l'ensemble.

L'ensemble de ressources $R_{(n)}$ peut comprendre un nombre $J$ de caractéristiques physiques et/ou virtuelles

$$\mathcal{R}_{(n)}^{j},$$

, chaque caractéristique physique et/ou virtuelle

$$\mathcal{R}_{(n)}^{j}$$

étant définie en fonction d'une valeur arbitraire d'utilité et/ou d'importance

$$p_{(n)}^{j}$$

de la caractéristique associée au système et/ou de la caractéristique associée au dispositif de communication de l'ensemble.

Dans des modes de réalisation, le facteur de disponibilité

$$x^j_{(n)}$$

et/ou la valeur arbitraire d'utilité et/ou d'importance

$$p^j_{(n)}$$

peuvent être déterminés à chaque mise à jour des états de connectivité relayée $\varepsilon_{r(n)}$ et/ou des états de connectivité directe $\varepsilon_{d(n\leftrightarrow n+1)}$.

Au moins une partie des dispositifs de communication de l'ensemble peut être configurée pour déterminer un message de ressources $\mathcal{M}_{\mathcal{R}(k)}{}'$ comprenant le poids $\kappa_{(n)}$. Au moins une partie des dispositifs de communication connectés peut être configurée pour envoyer le message de ressources $\mathcal{M}_{\mathcal{R}(k)}{}'$ via le module de communication relayée.

Chaque dispositif de communication de l'ensemble peut comprendre une unité de géolocalisation configurée pour fournir des données de géolocalisation du dispositif de communication de l'ensemble, au moins certains des dispositifs de communication de l'ensemble étant configurés pour déterminer un message à transmettre . parti comprenant au moins une partie des données de géolocalisation du dispositif de communication de l'ensemble. Au moins certains des dispositifs de communication connectés peuvent être configurés pour envoyer le message à transmettre . parti via le module de communication relayée et/ou via le module de communication directe. Le centre de communication peut être configuré pour recevoir les messages . parti transmis par les dispositifs de communication connectés, un des critères de détermination étant déterminé à partir des données de géolocalisation.

L'invention fournit également un procédé de gestion de communication sans fil critique mis en œuvre dans un système de communication sans fil critique comprenant un ensemble de $\mathcal{N}$ dispositifs de communication. Le procédé comprend une étape de communication directe mise en œuvre dans chaque dispositif de communication de l'ensemble selon un protocole de communication directe et une étape de communication relayée mise en œuvre dans chaque dispositif de communication de l'ensemble fonctionnant selon un protocole de communication relayée, c'est-à-dire avec connexion à une infrastructure réseau via un réseau d'interconnexion mise en œuvre dans le système de communication. L'étape de communication relayée est associée à un état de connectivité relayée correspondant à un état de connexion du dispositif de communication de l'ensemble avec le réseau d'interconnexion. L'étape de communication directe est associée à ( $\mathcal{N}$ - 1) états de connectivité directe correspondant à un état de liaison de communication sans fil directe du dispositif de communication de l'ensemble avec chacun des autres dispositifs de communication de l'ensemble de dispositifs de communication sans fil critiques, l'état de connectivité directe ayant une valeur binaire parmi une première valeur et une deuxième valeur, le système de communication sans fil comprenant en outre au moins un dispositif de communication non connecté au réseau d'interconnexion et au moins un dispositif de communication connecté au réseau d'interconnexion, l'état de connectivité directe $\varepsilon_{d(n\leftrightarrow h)}$, correspondant à l'état de liaison de communication sans fil directe du dispositif de communication connecté avec le dispositif de communication non connecté, étant égal à la première valeur si un dispositif de communication connecté et un dispositif de communication non connecté sont à portée radio directe. Le procédé comprend une étape consistant à recevoir les états de connectivité relayée et les états de connectivité directe de l'ensemble des N dispositifs de communication sans fil critiques, chaque dispositif de communication connecté étant associé à un nombre d'états de connectivité directe $\chi_{d(n)}$ déterminé à partir des états de connectivité directe $\varepsilon_{d(n\leftrightarrow h)}$. Le procédé comprend en outre une étape de sélection d'un équipement de supervision parmi l'ensemble de N dispositifs de communication à partir des états de connectivité relayée $\varepsilon_{r(n)}$, et des nombres d'états de connectivité directe $\chi_{d(n)}$ déterminés.

Chaque dispositif de communication de l'ensemble peut comprendre en outre un ensemble des ressources $\mathcal{R}_{(n)}$, et le procédé peut comprendre les étapes consistant à :

- déterminer une liste initiale comprenant $\mathcal{K}$ identifiants $\iota_{(k)}$ associés à $\mathcal{K}$ dispositifs de communication connectés au réseau parmi l'ensemble des $\mathcal{N}$ identifiants $i_{(n)}$, la liste initiale étant déterminée à partir des états de connectivité relayée $\varepsilon_{r(n)}$ et des états de connectivité directe $\varepsilon_{d(n \leftrightarrow n+1)}$,

- déterminer pour chaque identifiant $i_{(k)}$ associé à un dispositif de communication connecté un nombre d'états de connectivité directe $\chi_{d(k)}$, le nombre d'état de connectivité directe $\chi_{d(k)}$ étant déterminé à partir des états de connectivité directe $\varepsilon_{d(k \leftrightarrow h)}$ correspondant aux états de liaison de communication sans fil direct du dispositif de communication non connectés au réseau d'états de connectivité relayée $\varepsilon_{r(h)}$,

- déterminer une liste de connexions comprenant des nombres d'état de connectivité directe $\chi_{d(k)}$ associés à $\mathcal{K}$ identifiants $i_{(k)}$ ordonnés selon un ordre choisi, entre un nombre d'état de connectivité directe maximal $\chi_{max}$ et un nombre d'état de connectivité directe minimal $\chi_{min}$,

- déterminer pour chaque identifiant $i_{(k)}$ associé à un dispositif de communication connecté, parmi au moins une partie des identifiants $i_{(k)}$, une valeur de poids $\kappa_{(k)}$, la valeur de poids $\kappa_{(k)}$ étant déterminée à partir de l'ensemble des ressources $\mathcal{R}_{(n)}$,

- déterminer une liste de poids comprenant des valeurs de poids $\kappa_{(k)}$ associées aux $\mathcal{K}$ identifiants $i_{(k)}$ de la partie des identifiants $i_{(k)}$, la liste de poids étant ordonnée selon l'ordre choisi, entre une valeur de poids maximale $K_{max}$ et une valeur de poids minimale $K_{min}$,

- déterminer une liste de dispositifs prioritaires comprenant des dispositifs prioritaires associés aux $\mathcal{K}$ identifiants $i_{(k)}$ de la partie des identifiants $i_{(k)}$ en fonction de la liste de poids et de la liste de connexions,

- déterminer un dispositif de supervision à partir de la liste de dispositifs prioritaires.

Le système et le procédé de gestion de communication sans fil critiques selon les modes de réalisation de l'invention permettent d'améliorer la communication entre des dispositifs de communication sans fil critiques disposés sous la couverture d'une infrastructure et/ou de zones non couvertes par cette infrastructure.

Ils permettent de générer une solution abordable, en termes de mise en œuvre et de prix, pour effectuer le maintien des communications entre des dispositifs de communication sans fil critique sur une couverture surfacique supérieure à 99% du territoire et notamment une couverture nationale native.

Ils permettent également de générer une solution abordable, en termes de mise en œuvre et de prix, pour effectuer le maintien des communications entre des dispositifs de communication sans fil critique hors couverture réseau sur plusieurs centaines de mètres.

## Description des figures

D'autres caractéristiques, détails et avantages de l'invention ressortiront à la lecture de la description faite en référence aux dessins annexés donnés à titre d'exemple.

[Fig.1] La figure 1 est un schéma représentant un système de communication, selon des modes de réalisation de l'invention.

[Fig.2] La figure 2 est un schéma représentant deux modes de communication sans fil entre deux dispositifs de communication sans fils critique, selon des modes de réalisation de l'invention.

[Fig.3] La figure 3 est un schéma représentant un dispositif de communication sans fil critique, selon des modes de réalisation de l'invention.

[Fig.4] La figure 4 illustre un exemple d'une matrice de connectivité élémentaire d'un dispositif de communication sans fil critique, selon des modes de réalisation de l'invention.

[Fig.5] La figure 5 illustre un exemple d'une matrice de connectivité globale d'un équipement de supervision, selon des modes de réalisation de l'invention.

[Fig.6] La figure 6 est un organigramme représentant les étapes du procédé de gestion de communication sans fil critique pour l'émission de messages, selon des modes de réalisation de l'invention.

[Fig.7] La figure 7 est un organigramme représentant les étapes du procédé de gestion de communication sans fil critique pour la réception de messages, selon des modes de réalisation de l'invention.

[Fig.8] La figure 8 est un organigramme représentant les étapes du procédé de gestion de communication sans fil critique pour la supervision des liaisons de communication sans fil direct d'un dispositif de communication sans fil critique, selon des modes de réalisation de l'invention.

[Fig.9] La figure 9 est un organigramme représentant les étapes du procédé de gestion de communication sans fil critique pour la supervision des liaisons de communication sans fil direct entre dispositifs de communication sans fil critique, selon des modes de réalisation de l'invention.

[Fig.10] La figure 10 est un organigramme représentant les étapes du procédé de gestion de communication sans fil critique pour la détermination de l'équipement de supervision, selon des modes de réalisation de l'invention.

[Fig.11] La figure 11 est un organigramme représentant des sous-étapes du procédé de gestion de communication sans fil critique pour la supervision des liaisons de communication sans fil direct entre dispositifs, selon des modes de réalisation de l'invention.

[Fig.12] La figure 12 est un organigramme représentant des sous-étapes du procédé de gestion de communication sans fil critique pour la réception de messages, selon des modes de réalisation de l'invention.

Des références identiques sont utilisées dans les figures pour désigner des éléments identiques ou analogues. Pour des raisons de clarté, les éléments représentés ne sont pas à l'échelle.

## Description détaillée

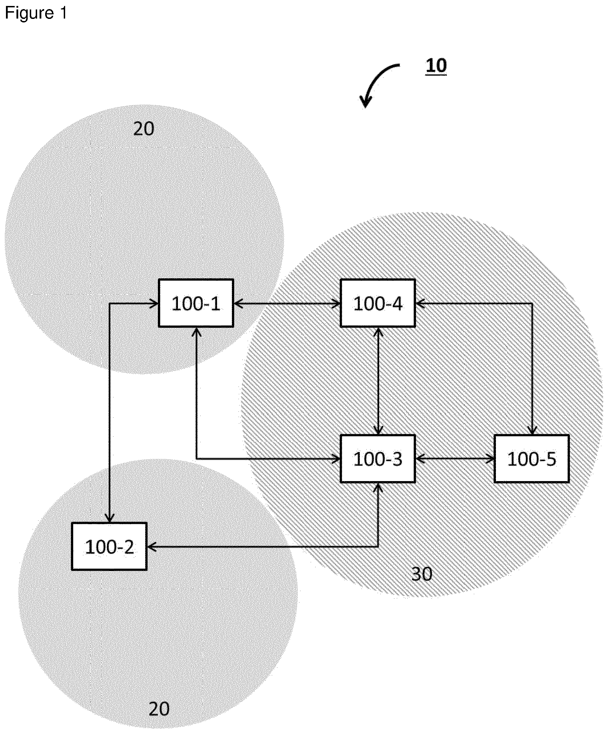

La figure 1 représente schématiquement un système de communication sans fil critique 10 comprenant un ensemble de dispositifs de communication 100-1, 100-2, 100-3, 100-4 et 100-5, selon des modes de réalisation de l'invention.

Le système de communication sans fil critique 10 est utilisé dans le domaine des communications sans fil critiques, par des utilisateurs, dans des situations critiques, par exemple dans des situations liées à la sécurité publique, dans le domaine militaire ou des situations d'urgence. Par exemple et sans limitation, les utilisateurs peuvent être, selon le cas d'usage, des forces de secours ou des forces de sécurité, des ambulanciers, etc.

Un dispositif de communication sans fil critique 100-n (ou dispositif de communication) désigne un équipement utilisateur utilisé par un utilisateur final U-n, pour communiquer avec au moins un autre utilisateur U-(n+1) disposant d'un dispositif de communication 100-(n+1) dans le système de communication sans fil critique 10.

Chaque dispositif de communication 100-n du système de communication sans fil critique 10 est configuré pour communiquer avec au moins un autre dispositif de communication 100-(n+1) du système de communication sans fil critique 10, selon au moins un mode de communication sans fil.

Le système de communication sans fil critique 10 comprend un ensemble de $\mathcal{N}$ de dispositifs 100-n, supérieur ou égal à 2. Dans la suite de la description, l'indice 'n' est associé à n'importe quel utilisateur final du système.

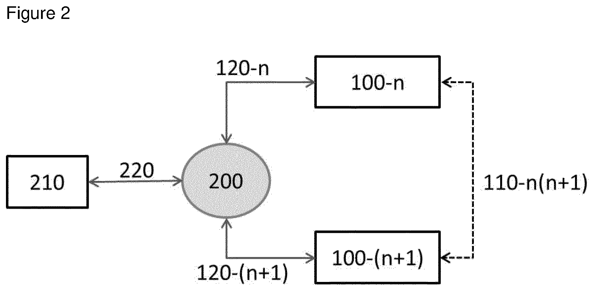

La figure 2 représente schématiquement deux modes de communication sans fil entre deux dispositifs de communication 100-n et 100-(n+1), selon des modes de réalisation de l'invention.

Le premier mode de communication sans fil entre les deux dispositifs de communication 100-n et 100-(n+1) peut être un « mode de communication directe » mis en œuvre selon un « protocole de communication directe » (c'est-à-dire sans infrastructure réseau). En particulier, un protocole de communication directe peut être par exemple une transmission de radiocommunications définie selon la norme de radio numérique mobile DMR (*Digital Mobile Radio* selon l'expression anglo-saxonne correspondante) établie par l'organisme de normalisation ETSI (*European Telecommunications Standards Institute* selon l'expression anglo-saxonne correspondante).

Dans l'exemple de réalisation représenté sur la figure 2, le dispositif de communication 100-n et le dispositif de communication 100-(n+1) sont connectés entre eux au moyen d'une liaison de communication sans fil directe 110-n(n+1). En outre, pour que la liaison de communication sans fil directe 110-n(n+1) soit effective, les dispositifs 100-n et 100-(n+1) doivent être à portée radio directe.

Le deuxième mode de communication sans fil entre les deux dispositifs de communication 100-n et 100-(n+1) peut être un « mode de communication 'relayée' » mis en œuvre selon un « protocole de communication 'relayée' » (c'est-à-dire avec connexion à une infrastructure réseau). En particulier, un protocole de communication relayée peut être une transmission de radiocommunications sans fil, par exemple et sans limitation, définie selon la norme de téléphonie mobile LTE (*Long Term Evolution* selon l'expression anglo-saxonne correspondante) et établie par l'organisme de normalisation 3GPP (*3rd Generation Partnership Project* selon l'expression anglo-saxonne correspondante), ou selon une norme de communication postérieure au LTE par exemple associée à la cinquième génération de technologie réseau mobile (5G).

Le système de communication sans fil critique 10 peut comprendre une infrastructure réseau configurée pour la mise en œuvre d'un réseau d'interconnexion 200. Dans un mode de réalisation, l'infrastructure réseau peut comprendre une architecture centralisée ou distribuée en une pluralité de sites radio (non représentés sur les figures) interconnectés via un réseau d'interconnexion 200 (représenté schématiquement sur la figure 2). Dans un tel mode de réalisation, les sites radio peuvent être par exemple des sites radio mobiles, déployés via une infrastructure véhiculaire mobile. Dans un tel système, un dispositif de communication 100-n correspond à un terminal mobile (ou téléphonique), encore appelé équipement utilisateur UE (acronyme de *'user equipment'*), propre à être connecté au réseau d'interconnexion 200 via un ou plusieurs sites radio.

Dans l'exemple de réalisation représenté sur la figure 2, le dispositif de communication 100-n et le dispositif de communication 100-(n+1) sont connectés au réseau d'interconnexion 200 (et par conséquent entre eux) respectivement par une liaison de communication sans fil relayée 120-n et la transmission sans fil relayée 120-(n+1).

Selon certains modes de réalisation, le système de communication sans fil critique 10 peut comprendre un centre de communication 210 connecté au réseau d'interconnexion 200 (et donc aux dispositifs de communication 100-n connectés au réseau d'interconnexion 200) par une transmission sans fil 220 (dite 'transmission sans fil centrale'). Par exemple et sans limitation, un centre de communication 210 peut être un centre de commandement et/ou un centre de gestion de données.

Chaque dispositif de communication 100-n du système de communication sans fil critique 10 est disposé dans une zone géographique pouvant comprendre une ou plusieurs zones géographiques avec couverture du réseau d'interconnexion 200, appelées zones avec couverture 20, et au moins une zone géographique sans couverture (ou hors couverture) du réseau d'interconnexion 200, appelées zones hors couverture 30. Dans l'exemple de réalisation représenté sur la figure 1, les dispositifs de communication 100-1 et 100-2 sont disposés dans des zones avec couverture 20, alors que les dispositifs de communication 100-3, 100-4 et 100-5 sont disposés dans une zone sans couverture 30. Les dispositifs de communication 100-1 et 100-2 sont alors « en ligne » ou « en réseau », tandis que les dispositifs de communication 100-3, 100-4 et 100-5 sont « hors ligne » ou « hors réseau » et ne peuvent pas communiquer entre eux ou avec les dispositifs de communication 100-1 et 100-2, selon le mode de communication relayée.

De manière générale, deux dispositifs de communication 100-n et 100-(n+1) « en ligne » peuvent communiquer entre eux selon le mode de communication relayée. Deux dispositifs de communication 100-n et 100-(n+1) « en ligne » peuvent en outre communiquer entre eux selon le mode de communication directe s'ils sont à portée radio directe. Si l'un ou les deux dispositifs de communication 100-n et 100-(n+1) sont « hors ligne », les deux dispositifs ne peuvent pas communiquer entre eux selon le mode de communication relayée, et peuvent communiquer entre eux selon le mode de communication directe s'ils sont à portée radio directe.

Chaque dispositif de communication 100-n du système de communication sans fil critique 10 est configuré pour être capable :

- d'émettre un même message de façon synchrone à la fois au travers du mode de communication relayée et au travers du mode de communication directe ; et

- de recevoir des messages émis au travers du mode de communication relayée et/ou au travers du mode de communication directe par d'autres dispositifs de communication 100-(n+1).

Tel qu'utilisé ici, le terme 'message', en émission, peut désigner un ensemble de données associé à une ou plusieurs informations à transmettre par un utilisateur U-n disposant d'un dispositif de communication 100-n, à destination de un ou plusieurs autres utilisateurs U-(n+1) disposant d'un dispositif de communication 100-(n+1) ayant des fonctions similaires ou équivalentes aux fonctions du dispositif de communication 100-n. Similairement, le terme 'message', en réception, fait référence à un ensemble de données associé à une ou plusieurs informations reçues par un utilisateur U-n disposant d'un dispositif de communication 100-n, et provenant d'un autre utilisateur U-(n+1) disposant d'un dispositif de communication 100-(n+1). Par exemple et sans limitation, un message peut être un signal acoustique (i.e. un message vocal, un message sonore, etc.) et/ou un signal visuel (i.e. une ou plusieurs images, un message texte, etc.).

Dans des modes de réalisation, le système de communication sans fil critique 10 peut comprendre au moins un sous-ensemble (noté E) déterminé parmi l'ensemble des N dispositifs 100-n. En particulier, le système de communication sans fil critique 10 peut comprendre :

- un sous-ensemble $E_{\mathcal{K}}$ de $\mathcal{K}$ dispositifs « en ligne » et à portée radio directe d'au moins un autre dispositif 100-n du système 10, ces dispositifs étant alors notés 100-k. Le nombre $\mathcal{K}$ peut être notamment un entier supérieur ou égal à 1. Dans la suite de la description, l'indice 'k' est associé à différents utilisateurs finaux ayant un dispositif connecté au réseau d'interconnexion 200 et pouvant communiquer par mode de communication direct avec au moins un autre utilisateur final U-n ; et

- un sous-ensemble $E_{\mathcal{H}}$ de $\mathcal{H}$ dispositifs « hors ligne » et à portée radio directe d'au moins un autre dispositif 100-n du système 10, ces dispositifs étant alors notés 100-h. Le nombre $\mathcal{H}$ peut être notamment un entier supérieur ou égal à 0. Dans la suite de la description, l'indice 'h' est associé à différents utilisateurs finaux ayant un dispositif non connecté au réseau d'interconnexion 200 et pouvant communiquer par mode de communication direct avec au moins un autre utilisateur final U-n ; et/ou

- un sous-ensemble $E_{\mathcal{Y}}$ de $\mathcal{Y}$ dispositifs « en ligne » et hors de portée radio directe des autres dispositifs 100-n du système 10, ces dispositifs étant alors notés 100-y. Le nombre y peut être notamment un entier supérieur ou égal à 0. Dans la suite de la description, l'indice 'y' est associé à différents utilisateurs finaux ayant un dispositif connecté au réseau d'interconnexion 200 et ne pouvant communiquer par mode de communication direct avec aucun autre utilisateur final U-n ; et/ou

- un sous-ensemble $E_{\mathcal{Z}}$ de $\mathcal{Z}$ dispositifs « hors ligne » et hors de portée radio directe des autres dispositifs 100-n du système 10, ces dispositifs étant lors notés 100-z. Le nombre $\mathcal{Z}$ peut être notamment un entier supérieur ou égal à 0. Avantageusement, la présente invention permet d'obtenir en tout temps un nombre $\mathcal{Z}$ égal à 0. Dans la suite de la description, l'indice 'z' est associé à différents utilisateurs finaux ayant un dispositif non connecté au réseau d'interconnexion 200 et ne pouvant communiquer par mode de communication direct avec aucun autre utilisateur final U-n.

La somme des nombres de dispositifs des différents sous-ensembles doit être égale à la somme totale des dispositifs du système 10, telle que :

$$\mathcal{K} + \mathcal{H} + \mathcal{Y} + \mathcal{Z} = \mathcal{N} \qquad\qquad (01)$$

Avantageusement, la présente invention permet d'obtenir en tout temps un nombre Z égal à 0.

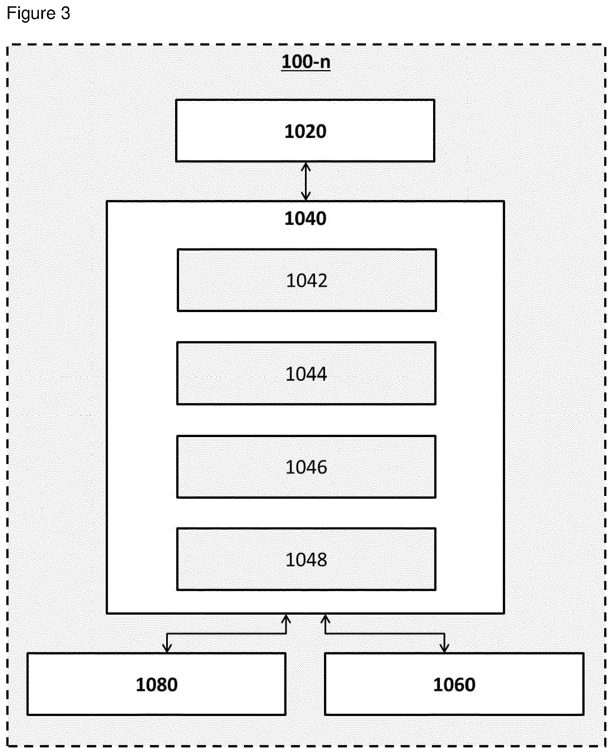

La figure 3 représente schématiquement un dispositif de communication 100-n comprenant un module d'acquisition et de transmission de message 1020, un module de gestion 1040, un module de communication directe 1060 et un module de communication relayée 1080, selon des modes de réalisation de l'invention.

Le module d'acquisition et de transmission de message 1020 peut comprendre une ou plusieurs interfaces homme-machine. Ces interfaces homme-machine peuvent comprendre un ou plusieurs moyens d'acquisition de message configurés pour acquérir un message $\mathcal{M}_{0(n)}$ (appelé aussi un message initial $\mathcal{M}_{0(n)}$) généré par un utilisateur U-n, par le dispositif de communication 100-n. Ces interfaces homme-machine peuvent comprendre également un ou plusieurs moyens de transmission de messages $\mathcal{M}_{t(n+1)}$, reçus par le dispositif de communication 100-n, à l'utilisateur U-n, ces messages $\mathcal{M}_{t(n+1)}$ ayant été précédemment générés par des utilisateurs U-(n+1) et émis par ces derniers à destination de l'utilisateur U-n. Par exemple et sans limitation, le module d'acquisition et de transmission de message 1020 peut comprendre un microphone, un haut-parleur, un clavier, un écran d'affichage et/ou une ou plusieurs unités optoélectroniques capables d'émettre de la lumière telles que des diodes électroluminescentes.

Le module de communication directe 1060 du dispositif de communication 100-n est configuré pour émettre et recevoir un ou des messages au travers de la liaison de communication sans fil directe 110-n(n+1). Par exemple et sans limitation, le module de communication directe 1060 peut comprendre une unité matérielle telle qu'une carte électronique appelée 'module DMR' par exemple.

Dans des modes de réalisation, le module de communication directe 1060 peut en outre être configuré pour sécuriser par cryptage les messages à émettre selon une 'clé de cryptage des communications directes', par exemple commune aux dispositifs de communication du système de communication sans fil critique 10. Par conséquent, le module de communication directe 1060 peut en outre être configuré pour décrypter les messages reçus selon la clé de cryptage commune des communications directes.

Le module de communication relayée 1080 du dispositif de communication 100-n est configuré pour émettre et/ou recevoir un ou des messages au moyen de la transmission sans fil relayée 120-n du réseau d'interconnexion 200. Par exemple et sans limitation, le module de communication relayée 1080 peut être un terminal téléphonique (i.e. équipement utilisateur ou UE), propre à être connecté au réseau d'interconnexion 200 via un ou plusieurs sites radio. Le module de communication relayée 1080 peut comprendre une application dédiée aux communications de missions critiques, ou communications de groupe, encore appelée application MCX (*Mission-Critical Services* en langue anglosaxonne). Dans un tel mode de réalisation, selon le protocole de communication relayée, le module de communication relayée 1080 des dispositifs du système 10 peut comprendre un client MCX tandis que le centre de communication 210 comprend un serveur MCX.

Le module de communication relayée 1080 du dispositif de communication 100-n est associé à un identifiant unique noté $i_{r(n)}$, identifiant le dispositif de communication 100-n.

Le module de communication relayée 1080 du dispositif de communication 100-n est en outre associé à un état de connectivité relayée $\varepsilon_{r(n)}$ correspondant à un état de connexion du dispositif de communication 100-n avec le réseau d'interconnexion 200.

Dans des modes de réalisation, le module de communication relayée 1080 du dispositif de communication 100-n peut alors être configuré pour générer (c'est-à-dire déterminer et mettre à jour) une structure de donnée, également appelée 'matrice de connectivité relayée' notée $\mathcal{T}_{r(n)}$, comprenant l'état de connectivité relayée $\varepsilon_{r(n)}$ du dispositif de communication 100-n et les états de connectivité relayée $\varepsilon_{r(n+1)}$ de chacun des autres dispositifs de communication 100-(n+1) de l'ensemble des dispositifs de communication du système 10 en fonction des identifiants uniques $i_{r(n)}$ et $i_{r(n+1)}$.

Dans certains modes de réalisation, le centre de communication 210 peut alors être configuré pour superviser la connexion de chacun des dispositifs de communication 100-n avec le réseau d'interconnexion 200, via leur module 1080 respectif, et pour générer (c'est à dire déterminer et mettre à jour) une structure de donnée telle qu'une 'matrice de connectivité relayée globale' notée $\mathcal{T}_r$, comprenant l'état de connectivité relayée $\varepsilon_{r(n)}$ de chacun des dispositifs de communication (100-n et 100-(n+1)) de l'ensemble des dispositifs de communication du système 10 en fonction de leurs identifiants uniques $i_{r(n)}$. Le centre de communication 210 peut alors être configuré pour transmettre une partie ou l'ensemble des informations de la matrice de connectivité relayée globale $\mathcal{T}_r$ aux dispositifs de communication 100-n via le réseau d'interconnexion 200 et donc leur module 1080 respectif.

La matrice de connectivité relayée $\mathcal{T}_{r(n)}$ peut être initialisée lorsque tous les dispositifs du système 10 sont « en ligne » dans un mode opérationnel. Tel qu'utilisé ici, un dispositif « en ligne » fait référence à un dispositif connecté au réseau 200. L'initialisation de la matrice de connectivité peut être mise en œuvre au début d'une mission ou d'une intervention spécifique menée par les utilisateurs du système 10. La matrice de connectivité relayée $\mathcal{T}_{r(n)}$ peut ensuite être mise à jour, selon une fréquence prédéfinie par le module de communication relayée 1080, lorsque le dispositif est connecté au réseau 200. Une matrice de connectivité relayée globale notée $\mathcal{T}_r$ comprend l'état de connectivité relayée $\varepsilon_{r(n)}$ précis à tout instant *t* de l'ensemble des dispositifs du système. La matrice de connectivité relayée $\mathcal{T}_{r(n)}$ d'un dispositif « hors ligne » peut en revanche être erronée. La matrice de connectivité relayée globale $\mathcal{T}_r$ peut être déterminée et maintenue par le centre de communication 210 par exemple.

Un état de connectivité relayée $\varepsilon_{r(n)}$ peut comprendre par exemple et sans limitation un entier et/ou un élément booléen. En particulier, l'entier peut être de type binaire. Ainsi, l'état de connectivité relayée $\varepsilon_{r(n)}$ peut prendre une valeur binaire parmi une première valeur et une deuxième valeur. L'état de connectivité relayée $\varepsilon_{r(n)}$ peut prendre une première valeur, par exemple égale à '1' (ou 'vrai') pour les dispositifs 100-k et 100-y connectés au réseau 200 (compris dans les sous-ensembles $E_{\mathcal{K}}$ et $E_{\mathcal{Y}}$). L'état de connectivité relayée $\varepsilon_{r(n)}$ peut prendre une deuxième valeur, par exemple égale à '0' (ou 'faux') pour les dispositifs 100-h et 100-z non connectés au réseau 200 (compris dans les sous-ensembles $E_{\mathcal{H}}$ et $E_{\mathcal{Z}}$). Une matrice de connectivité relayée $\mathcal{T}_r$ (ou $\mathcal{T}_{r(n)}$) peut être représentée par une structure de donnée, telle qu'une table de données, comprenant les informations relatives à l'état du mode de communication relayée (i.e. portée du réseau) d'une partie ou de l'ensemble des dispositifs de communication compris dans le système 10 en fonction de leur identifiant unique $i_{r(n)}$. Un état de connectivité relayée $\varepsilon_{r(n)}$ peut également comprendre une date relative à un horodatage correspondant au dernier « constat » de connectivité du dispositif 100-n au réseau d'interconnexion 200.

Dans des modes de réalisation, le module de communication relayée 1080 peut en outre être configuré pour sécuriser par cryptage les messages à émettre selon une clé de cryptage des communications relayées, qui peut, par exemple, être commune aux dispositifs de communication du système de communication sans fil critique 10. Le module de communication relayée 1080 peut alors être configuré pour décrypter les messages reçus selon la clé de cryptage commune des communications relayées.

Le centre de communication 210 peut générer via le réseau 200 le partage de clés de cryptage des communications relayées parmi l'ensemble des modules de communication relayée 1080 des dispositifs du système de communication sans fil critiques 10, lorsque ces dispositifs sont tous « en ligne » (i.e. connecté au réseau 200) dans un mode opérationnel. Un tel partage de clés peut être mis en œuvre au début d'une mission ou d'une intervention spécifique menée par les utilisateurs du système 10.

Le module d'acquisition et de transmission de message 1020, ainsi que le module de communication directe 1060 et le module de communication relayée 1080 peuvent chacun être connecté au module de gestion 1040. Le module de gestion 1040 est alors configuré pour collecter et traiter les messages à émettre provenant du module 1020 (acquis de l'utilisateur U-n) et pour les transférer vers les deux modules de communication 1060 et 1080. Le module de gestion 1040 est en outre configuré pour collecter et traiter des messages reçus provenant des deux modules de communication 1060 et 1080 et les transférer vers le module 1020 (à transmettre à l'utilisateur U-n).

Selon certains modes de réalisation, le centre de communication 210 peut générer via le réseau 200 le partage de clés de cryptage des communications directes auprès de l'ensemble des dispositifs du système de communication sans fil critique 10, lorsque ceux-ci sont tous « en ligne ». Avantageusement, ce partage de clés peut être mis en œuvre au début d'une mission ou d'une intervention spécifique menée par les utilisateurs du système 10. Pour cela, le centre de communication 210 peut être configuré pour transmettre une clé de cryptage des communications directes au module de communication relayée 1080 des différents dispositifs. Le module de gestion 1040 (relié au module de communication relayée 1080) peut alors être configuré pour transmettre cette clé de cryptage des communications directes au module de communication directe 1060, permettant un renouvellement rapide (par exemple, à chaque mission et/ou intervention) des clés dans ce mode de communication spécifique.

Selon certains modes de réalisation, le module d'acquisition et de transmission de message 1020 peut être un dispositif émetteur-récepteur portatif. Par exemple, le module d'acquisition et de transmission de message 1020 peut être un 'micro-poire' comprenant des moyens d'acquisition et de transmission de messages vocaux, tels que par exemple un micro, un haut-parleur et/ou des boutons de prises d'alternat. Ce micro-poire peut également présenter un écran permettant la lecture des messages texte reçus. Le module d'acquisition et de transmission de message 1020 peut par exemple être un smartphone configuré pour la saisie et/ou la lecture de messages de type texte ou audio, pour la saisie et/ou la consultation de positions de géolocalisation, l'acquisition et/ou la visualisation d'images.

Selon des modes de réalisation, les modules 1020, 1080 et 1060 peuvent être intégrés dans un même élément. Dans d'autres modes de réalisation, les modules 1020, 1080 et/ou 1060 peuvent comprendre des connectiques permettant d'échanger entre eux et/ou avec d'autres modules externes.

Dans des modes de réalisation, le module de module de gestion 1040 peut comprendre une unité matérielle (comme une carte électronique par exemple) s'interfaçant au module de communication directe 1060 et au module de communication relayée 1080. Le module de gestion 1040 peut en outre comprendre une unité logicielle et/ou micro-logicielle (i.e. logiciel embarqué) implémentée ou intégrée au module de communication directe 1060, au module de communication relayée 1080 et/ou au module d'acquisition et de transmission de message 1020.

La figure 3 représente une structure du module de gestion 1040, selon des modes de réalisation de l'invention.

Dans certains modes de réalisation, le module de gestion 1040 comprend une unité de traitement de message 1042 et une unité d'identification 1044.

L'unité logicielle et/ou micro-logicielle du module de gestion 1040 peut comprendre l'unité de traitement de message 1042 et l'unité d'identification 1044.

L'unité de traitement de message 1042 est configurée pour convertir un message $\mathcal{M}_{0(n)}$, acquis via le module d'acquisition de message 1020, en un message de communication directe $\mathcal{M}_d$ en fonction du protocole de communication directe associé au module de communication directe 1060. L'unité de traitement de message 1042 est configurée pour convertir le même message $\mathcal{M}_{0(n)}$ en un message de communication relayée $\mathcal{M}_r$ en fonction du protocole de communication relayée associé au module de communication relayée 1080.

Dans certains modes de réalisation, le module de gestion 1040 des dispositifs 100-n du système 10 comprend également une unité de géolocalisation 1048, telle que représentée sur la figure 3.

Une unité de géolocalisation 1048 peut être configurée pour fournir des données de géolocalisation du dispositif de communication 100-n. Le module de gestion 1040 peut alors être configuré pour associer au moins une partie de ces données de géolocalisation à une partie ou à tous les messages de communication directe $\mathcal{M}_d$ et/ou les messages de communication relayée $\mathcal{M}_r$ émis par le dispositif 100-n.

En particulier, un message émis par un module de communication relayée 1080 au sein du réseau d'interconnexion 200 comprend une donnée d'identification associée à l'identifiant unique $i_{r(n)}$ de ce module de communication relayée 1080. L'identifiant unique $i_{r(n)}$ peut alors être reconnu par n'importe quel module de communication relayée 1080 et/ou module de gestion 1040 d'un dispositif 100-(n+1) du système de communication sans fil critique 10 recevant et/ou traitant ce message, alors noté $\mathcal{M}_{r(n)}$.

L'unité d'identification 1044 est configurée pour déterminer un identifiant $i_{d(n)}$ associé au module de communication directe 1060 du dispositif de communication 100-n, à partir de l'identifiant unique $i_{r(n)}$ du module de communication relayée 1080 du même dispositif de communication 100-n.

En particulier, l'unité d'identification 1044 peut être configurée pour appliquer une fonction f à un identifiant unique $i_r$ pour générer un identifiant associé $i_d$ telle que :

$$i_d = \mathrm{f}(i_r) \qquad\qquad (02)$$

Dans l'équation (02), par exemple et sans limitation, la fonction f peut être une fonction de traduction ou de transformation de format, ou encore une application bijective, injective, et/ou surjective.

Dans certains modes de réalisation, un identifiant unique $i_r$ peut être un identifiant MCX comprenant un nombre $N_r$ de digits (par exemple $N_r$=10) et défini dans un format MSISDN (*Mobile Station International Subscriber Directory Number* selon l'expression anglo-saxonne correspondante). La fonction f peut alors être une fonction de troncature telle que l'identifiant associé $i_d$ comprend un nombre $N_d$ de digits et tel que $N_d$ est inférieur à $N_r$ ($N_d$<$N_r$ et par exemple $N_d$=7 correspondant aux 7 premiers digits de l'identifiant MCX appelés les 7 digits "call ID").

Avantageusement, l'unité de traitement de message 1042 est configurée pour ajouter au message de communication directe $\mathcal{M}_d$ à émettre par un module de communication directe 1060 une donnée d'identification définie par cet identifiant associé $i_{d(n)}$. Par conséquent, l'identifiant associé $i_{d(n)}$ peut être reconnu par n'importe quel module de gestion 1040 d'un dispositif 100-(n+1) du système de communication sans fil critique 10 traitant ce message, alors noté $\mathcal{M}_{d(n)}$.

Dans des modes de réalisation, l'unité de traitement de message 1042 peut être configurée pour assurer l'émission de façon synchrone du message de communication directe $\mathcal{M}_{d(n)}$ et du message de communication relayée $\mathcal{M}_{r(n)}$ (émis par le module de communication directe 1060 et le module de communication relayée 1080 respectivement), notamment lorsque le dispositif de communication 100-n est connecté au réseau d'interconnexion 200.

Par conséquent, le module de gestion 1040 peut être configuré pour assurer la transmission et la réception des messages entre dispositifs.

Le module de gestion 1040 peut en outre être configuré pour effectuer la duplication des messages entre le mode relayé et le mode direct, ainsi que pour effectuer l'adaptation des messages aux formats attendus dans chacun des modules 1080 et 1060, et du module 1020.

Le module de gestion 1040 peut également prendre en compte des commandes locales de l'utilisateur U-n du dispositif 100-n. Certaines commandes locales peuvent être par exemple une prise d'appel (ou une prise d'alternat), ainsi qu'une signalisation associée à l'acquisition, à la réception et/ou à la transmission de messages, vers chacun des modules 1020, 1080 et 1060. Le module de gestion 1040 peut en outre être configuré pour appliquer un ensemble de règles configurables prenant en entrée les commandes locales et les signalisations effectuées par l'utilisateur U-n pour appliquer des traitements aux différents messages.

Par exemple et sans limitation, en réponse à une commande « prise d'alternat » effectuée par l'utilisateur U-n, une signalisation d'appel peut être générée par le module 1020 vers les modules 1080 et 1060. Les modules 1080 et 1060 peuvent alors être configurés pour acquitter cette signalisation au module de gestion 1040. En réponse à l'acquittement de chacun des deux modules 1080 et 1060, le module de gestion 1040 peut être configuré pour dupliquer et formater un message (initial) vocal acquis par le module 1020, puis pour l'envoyer aux deux modules 1080 et 1060.

De façon générale, le module de communication directe 1060 du dispositif de communication 100-n est configuré pour recevoir des messages de communication directe $\mathcal{M}_{d(n+1)}$ transmis par au moins un dispositif 100-(n+1) au travers de la transmission sans fil directe 110-n(n+1). Le module de communication relayée 1080 du dispositif de communication 100-n est configuré pour recevoir des messages de communication relayée $\mathcal{M}_{r(n+1)}$ transmis de dispositifs 100-(n+1) par l'intermédiaire de la transmission sans fil relayée 120-n et 120-(n+1) du réseau d'interconnexion 200.

L'unité de traitement de message 1042 peut alors être configurée pour traiter les messages $\mathcal{M}_{r(n+1)}$ et/ou les messages $\mathcal{M}_{d(n+1)}$ reçus par les modules 1060 et 1080. En particulier, l'unité de traitement de message 1042 peut être configurée pour convertir les messages $\mathcal{M}_{r(n+1)}$ et/ou $\mathcal{M}_{d(n+1)}$ en des messages convertis, encore appelés 'messages à transmettre' (notés $\mathcal{M}_{tr(n+1)}$ et $\mathcal{M}_{td(n+1)}$ via le module d'acquisition et de transmission de message 1020.

Dans des modes de réalisation, l'unité d'identification 1044 peut être configurée pour déterminer :

- l'identifiant unique $i_{r(n+1)}$ relatif aux données d'identification du message de communication relayée $\mathcal{M}_{r(n+1)}$, et

- l'identifiant associé $i_{d(n+1)}$ relatif aux données d'identification du message de communication directe $\mathcal{M}_{d(n+1)}$.

Le module de gestion 1040 du premier dispositif de communication 100-n peut alors être configuré pour comparer les identifiants $i_{r(n+1)}$ et $i_{d(n+1)}$ pour déterminer, en fonction du résultat de la comparaison, si le message identifié de communication directe $\mathcal{M}_{d(n+1)}$ et le message de communication relayée $\mathcal{M}_{r(n+1)}$ sont transmis par un même et unique deuxième dispositif de communication 100-(n+1) étant alors associé à un identifiant unique du dispositif, noté $i_{(n+1)}$ (encore appelé identifiant commun). Par exemple, cette comparaison peut être mise en œuvre par l'unité de traitement de message 1042 et/ou l'unité d'identification 1044.

Une partie ou l'ensemble des identifiants unique associé aux dispositifs du système 10 peut être sauvegardé(e) en mémoire dans l'application MCX et être rendu(e) disponible et accessible par le module de gestion 1040 au moyen de requêtes par exemple.

Le module de gestion 1040 du dispositif de communication 100-n peut être configuré pour déterminer l'identifiant unique $i_{r(n+1)}$ et l'identifiant associé $i_{d(n+1)}$ et pour associer chacun de ces identifiants $i_{r(n+1)}$ et $i_{d(n+1)}$ à un même identifiant $i_{(n+1)}$ (ou identifiant commun) relatif au dispositif de communication 100-(n+1). Pour faciliter la compréhension de l'invention et à titre de simplification, la suite de la description sera faite principalement en référence à l'identifiant $i_{(n)}$ (respectivement $i_{(n+1)}$ par exemple) associé au dispositif de communication 100-n (respectivement 100-(n+1) par exemple).

Dans certains modes de réalisation, le module de gestion 1040 de chaque dispositif 100-n du système 10 comprend également une unité de supervision 1046, telle que représentée sur la figure 3.

A la réception par un dispositif 100-n d'un message de communication directe $\mathcal{M}_{d(n+1)}$ associé à l'identifiant $i_{(n+1)}$ du dispositif 100-(n+1) la liaison de communication sans fil directe 110-n(n+1) est établie entre le dispositif émetteur 100-(n+1) et le dispositif de communication 100-n. L'unité de supervision 1046 du dispositif 100-n peut ainsi être configurée pour déterminer un état de connectivité directe $\varepsilon_{d(n\leftrightarrow n+1)}$ correspondant à un état de liaison de communication sans fil directe du dispositif émetteur 100-(n+1) avec ledit dispositif de communication 100-n.

En particulier, un état de connectivité directe $\varepsilon_{d(n\leftrightarrow n+1)}$ peut comprendre par exemple et sans limitation un entier et/ou un élément booléen. L'entier peut être de type binaire. Par exemple, l'état de connectivité directe $\varepsilon_{d(n\leftrightarrow n+1)}$ peut prendre une valeur binaire parmi une première valeur et une deuxième valeur. L'état de connectivité directe $\varepsilon_{d(n\leftrightarrow n+1)}$ peut prendre une première valeur, par exemple égale à '1' (ou 'vrai') si le dispositif 100-n reçoit les messages de communication directe émis par un dispositif 100-(n+1) (i.e. cela comprend donc tous les états de connectivité directe $\varepsilon_{d(k\leftrightarrow h)}$, $\varepsilon_{d(k\leftrightarrow k+1)}$, $\varepsilon_{d(h\leftrightarrow h+1)}$ et tous les états de connectivité directe réciproques entre des dispositifs 100-k et/ou 100-h qui sont à portée radio directe et qui sont compris dans les sous-ensembles $E_{\mathcal{K}}$ et/ou $E_{\mathcal{H}}$). L'état de connectivité directe $\varepsilon_{d(n\leftrightarrow n+1)}$ peut prendre une deuxième valeur, par exemple égale à '0' (ou 'faux') si le dispositif 100-n ne reçoit plus les messages de communication directe émis par un dispositif 100-(n+1) (ce qui comprend tout autres états de connectivité directe $\varepsilon_{d(y\leftrightarrow n)}$, $\varepsilon_{d(n\leftrightarrow y)}$, $\varepsilon_{d(z\leftrightarrow n)}$ et $\varepsilon_{d(n\leftrightarrow z)}$ entre au moins un dispositif 100-y et/ou 100-z compris dans les sous-ensembles $E_y$ et $E_z$ qui sont hors portée radio directe de tous les dispositifs 100-n du système 10, c'est-à-dire n'ayant pas reçu de message de communication directe depuis une durée déterminée). Un état de connectivité directe $\varepsilon_{d(n\leftrightarrow n+1)}$ peut également comprendre une date relative à un horodatage correspondant à la dernière liaison de communication sans fil directe 110-n(n+1) établie entre le dispositif émetteur 100-(n+1) et le dispositif de communication 100-n.

L'unité de supervision 1046 du dispositif 100-n peut être en outre configurée pour générer (c'est-à-dire déterminer et mettre à jour) une structure de donnée, également appelée 'matrice de connectivité élémentaire' notée $\tau_{(n)}$, comprenant les états de connectivité directe $\varepsilon_{d(n\leftrightarrow n+1)}$ de chacun des autres dispositifs de communication 100-(n+1) de l'ensemble du système 10 avec le dispositif 100-n. Chacun des états de connectivité directe $\varepsilon_{d(n\leftrightarrow n+1)}$ est alors associé aux différents identifiants uniques $i_{(n+1)}$ des dispositifs 100-(n+1) du système 10.

Dans des modes de réalisation, la matrice élémentaire $\tau_{(n)}$ peut en outre être générée à partir de la matrice de connectivité relayée $\tau_r$. La matrice de connectivité élémentaire $\tau_{(n)}$ peut être initialisée lorsque tous les dispositifs du système 10 sont « en ligne » (c'est-à-dire connectés au réseau 200) et à portée radio directe dans un mode opérationnel. Une telle initialisation de matrice peut être mise en œuvre au début d'une mission ou d'une intervention spécifique menée par les utilisateurs du système 10. Par conséquent, la matrice de connectivité élémentaire $\tau_{(n)}$ peut être mise à jour par la suite à chaque réception d'un message de communication directe $\mathcal{M}_{d(n+1)}$. La matrice élémentaire $\tau_{(n)}$ peut être mise à jour (ou enrichie et complétée) en réponse à l'établissement d'une liaison de communication sans fil directe 110-n(n+1) et/ou d'une transmission sans fil relayée 120-n active au réseau d'interconnexion 200.

Dans des modes de réalisation, le module de gestion 1040 du dispositif de communication 100-n peut comprendre une horloge interne (non représentée sur les figures). Avantageusement, dans ce cas, l'unité de supervision 1046 peut être configurée pour affecter un horodatage $t_{(n+1)}$ à chaque état de connectivité direct $\varepsilon_{d(n\leftrightarrow n+1)}$ associé à l'instant de réception du dernier message de communication directe $\mathcal{M}_{d(n+1)}$ (établissement d'une liaison de communication sans fil directe 110-n(n+1)), en utilisant l'horloge interne prévue dans le module 1040. Par exemple et sans limitation, l'unité de supervision 1046 peut déterminer un état de connectivité direct $\varepsilon_{d(n\leftrightarrow n+1)}$ égal à '0' (ou 'faux') si le dispositif 100-n ne reçoit plus de message de communication directe émis par le dispositif 100-(n+1) à un instant $t$, l'instant $t$ étant défini par rapport à un seuil de surveillance de communication $\tau_c$ tel que défini par l'équation (03), ce qui indique que le dispositif 100-(n+1) est hors portée radio directe :

$$t - t_{(n+1)} \geq \tau_c \qquad (03)$$

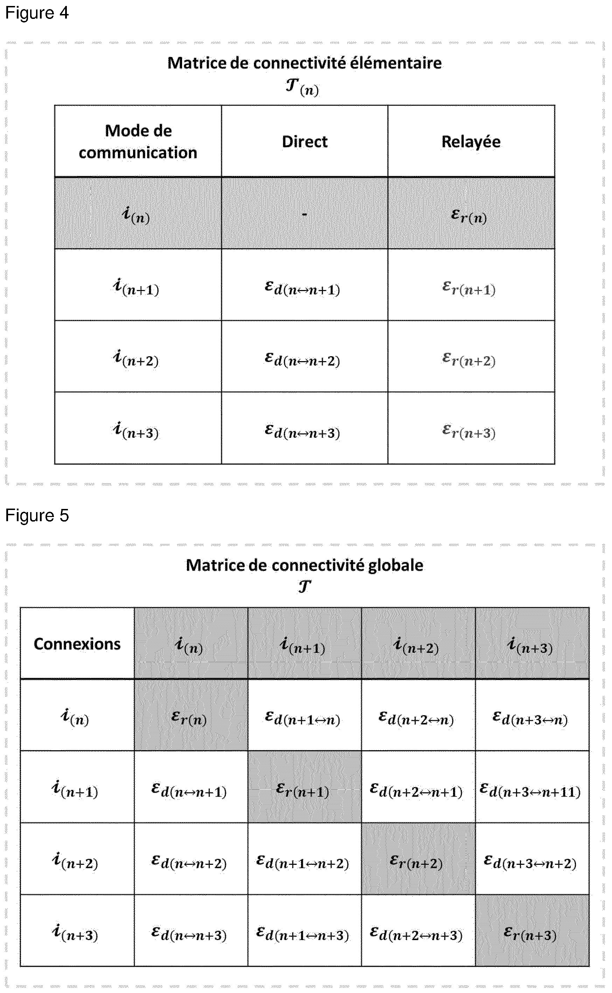

La figure 4 illustre un exemple d'une matrice de connectivité élémentaire $\tau_{(n)}$ d'un dispositif 100-n dans un système 10 comprenant les dispositifs 100-n, 100-(n+1), 100-(n+2) et 100-(n+3). La matrice de connectivité élémentaire $\tau_{(n)}$ est représentée dans cet exemple par une table de données comprenant les informations relatives aux états de connectivité relayée $\varepsilon_{r(n)}$, $\varepsilon_{r(n+1)}$, $\varepsilon_{r(n+2)}$ et $\varepsilon_{r(n+3)}$ de chaque dispositif 100-n, 100-(n+1), 100-(n+2) et 100-(n+3) du système 10. La table de données pour un dispositif 100-n peut comprendre également les informations relatives aux états de connectivité directe $\varepsilon_{d(n\leftrightarrow n+1)}$, $\varepsilon_{d(n\leftrightarrow n+2)}$ et $\varepsilon_{d(n\leftrightarrow n+3)}$ de chaque dispositif 100-(n+1), 100-(n+2) et 100-(n+3) du système 10 avec le dispositif 100-n. En outre, chacun des états de connectivité directe $\varepsilon_{d(n\leftrightarrow n+1)}$, $\varepsilon_{d(n\leftrightarrow n+2)}$ et $\varepsilon_{d(n\leftrightarrow n+3)}$ peut être associé à un horodatage respectif (c'est-à-dire $t_{(n+1)}$, $t_{(n+2)}$ et $t_{(n+3)}$, non représentés sur la figure 4).

Le module de gestion 1040 du dispositif de communication 100-n peut être configuré pour déterminer un message de connectivité relayée noté $\mathcal{M}_{\mathcal{T}(n)}$ à partir de la matrice de connectivité élémentaire $\tau_{(n)}$.

Selon certains modes de réalisation, le module de communication relayée 1080 du dispositif de communication 100-n peut être configuré pour émettre ce message de connectivité relayée $\mathcal{M}_{\mathcal{T}(n)}$ seulement si le dispositif de communication 100-n est « en ligne », c'est-à-dire connecté au réseau d'interconnexion 200.

Dans des modes de réalisation, le message de connectivité relayée $\mathcal{M}_{\mathcal{T}(n)}$ peut également comprendre au moins une partie des données de géolocalisation relatives au dispositif 100-n obtenues par exemple via l'unité de géolocalisation 1048.

Dans des modes de réalisation, l'émission du message de connectivité relayée $\mathcal{M}_{\mathcal{T}(n)}$ peut être effectuée en fonction de paramètres d'émission de connectivité prédéfinis. Par exemple, le module de gestion 1040 du dispositif de communication 100-n (comprenant une horloge interne) peut être configuré pour utiliser un paramètre d'émission de connectivité défini par la répétition de manière régulière de l'émission du message de connectivité relayée $\mathcal{M}_{\mathcal{T}(n)}$ en fonction d'une fréquence temporelle d'émission $f_e$ prédéfinie telle que $f_e = 1/\tau_e$. Le module de gestion 1040 du dispositif de communication 100-n peut en outre utiliser un autre paramètre d'émission de connectivité correspondant à un paramètre de mise à jour de la matrice de connectivité élémentaire $\tau_{(n)}$ générant l'émission du message de connectivité relayée $\mathcal{M}_{\mathcal{T}(n)}$ réactualisé.

Par exemple et sans limitation, le message de connectivité relayée $\mathcal{M}_{\mathcal{T}(n)}$ peut être vide si la matrice de connectivité élémentaire $\tau_{(n)}$ reste inchangée entre deux émissions du message de connectivité relayée $\mathcal{M}_{\mathcal{T}(n)}$, c'est-à-dire si aucun état de connectivité relayée et/ou directe n'a été modifié. Ceci implique notamment que le dispositif 100-n a réceptionné au moins un message de communication directe $\mathcal{M}_{\mathrm{d}(n+1)}$ de chacun des autres dispositifs émetteurs 100-(n+1) pendant l'intervalle de temps $\tau_e$ entre les deux émissions du message de connectivité relayée $\mathcal{M}_{\mathcal{T}(n)}$. Alternativement, le message de connectivité relayée $\mathcal{M}_{\mathcal{T}(n)}$ peut comprendre une partie ou l'ensemble de la matrice de connectivité élémentaire $\tau_{(n)}$, si au moins un état de connectivité relayée et/ou directe de la matrice de connectivité élémentaire $\tau_{(n)}$ est modifié. Le message de connectivité relayée $\mathcal{M}_{\mathcal{T}(n)}$ peut comprendre par exemple l'identifiant $i_{(n+1)}$ du dispositif 100-(n+1) n'ayant pas établi de liaison de communication sans fil directe 110-n(n+1). Un tel mode de réalisation d'émission différentielle de message a l'avantage de permettre la génération de messages compacts, et notamment moins importants (en termes de taille) qu'un message généré selon un mode de réalisation impliquant l'émission systématique de la matrice $\tau_{(n)}$.

Dans des modes de réalisation, un procédé de supervision des communications sans fil critiques peut alors être mis en œuvre par un ou plusieurs équipements de supervision 400 compris dans système de communication sans fil critique 10. Un équipement de supervision 400 peut être un dispositif de communication connecté au réseau d'interconnexion 200 et/ou le centre de communication 210 (via le serveur MCX par exemple). Un équipement de supervision 400 peut notamment être configuré pour recevoir les messages de connectivité relayés $\mathcal{M}_{\mathcal{T}(n)}$ envoyés par chaque dispositif de communication 100-n connecté au réseau d'interconnexion 200 et en déduire les matrices de connectivité élémentaires $\tau_{(n)}$ associées. En particulier, si l'équipement de supervision 400 est un dispositif de communication 100-n, le module de communication relayée 1080 reçoit les messages de connectivité relayés $\mathcal{M}_{\mathcal{T}(n)}$ et le module de gestion 1040 (via l'unité de traitement de message 1042 et l'unité d'identification 1044 par exemple), et les traite pour en déduire les matrices de connectivité élémentaires $\tau_{(n)}$ associées.

Selon des modes de réalisation, l'équipement de supervision 400 peut être configuré pour associer à chaque matrice de connectivité élémentaire $\tau_{(n)}$ reçu un horodatage $t_{\tau(n)}$, en utilisant une horloge interne prévue dans le module de gestion 1040. Par exemple, un horodatage $t_{\tau(n)}$ peut comprendre au moins une donnée temporelle relative à l'émission et/ou à la réception du message de connectivité relayé $\mathcal{M}_{\mathcal{T}(n)}$ reçu.

Un équipement de supervision 400 peut en outre être configuré pour générer (i.e. déterminer et mettre à jour) une structure de donnée, également appelée 'matrice de connectivité globale' notée T, notamment à partir de l'ensemble des matrices de connectivité élémentaires $\tau_{(n)}$ reçues. En particulier, la matrice de connectivité globale T peut être initialisée lorsque tous les dispositifs 100-n du système 10 sont « en ligne » (i.e. connectés au réseau 200) et à portée radio directe dans un mode opérationnel. Une telle initialisation de matrice peut être mise en œuvre au début d'une mission ou d'une intervention spécifique menée par les utilisateurs du système 10. La matrice de connectivité globale T peut ensuite être mise à jour selon une fréquence prédéfinie par l'équipement de supervision 400 et/ou à chaque réception de message de connectivité relayé $\mathcal{M}_{\mathcal{T}(n)}$.

Dans certains modes de réalisation, l'équipement de supervision 400 peut être agencé pour déterminer la matrice de connectivité globale T en associant à chaque identifiant $i_{(n)}$ de l'ensemble des dispositifs 100-n du système 10, au moins une partie des données de géolocalisation relatives au dispositif 100-n. Dans un tel cas, l'équipement de supervision 400 peut être configuré pour extraire les informations relatives aux données de géolocalisation du dispositif 100-n à partir du message de connectivité relayée $\mathcal{M}_{\mathcal{T}(n)}$ reçu et/ou de n'importe quel autre messages de communication directe $\mathcal{M}_{\mathrm{d}(n)}$ et/ou les messages de communication relayée $\mathcal{M}_{\mathrm{r}(n)}$ émis par le dispositif 100-n. En particulier, l'équipement de supervision 400 peut être configuré pour déterminer, à partir des différentes données de géolocalisation et des identifiants $i_{(n)}$ une cartographie du positionnement des différents dispositifs 100-n du système.

Dans un mode de réalisation, la matrice de connectivité globale T peut comprendre l'ensemble des identifiants $i_{(n)}$ des dispositifs 100-n du système 10 et une information de 'statut' associé à chacun des identifiants $i_{(n)}$. Par exemple et sans limitation, un statut peut être « connecté réseau et mode direct », « connecté réseau », « connecté mode direct » ou « non connecté ».

La figure 5 représente une matrice connectivité globale T d'un système 10 comprenant les dispositifs 100-n, 100-(n+1), 100-(n+2) et 100-(n+3), selon un autre exemple de réalisation. La matrice de connectivité globale T est représentée dans cet exemple par une table de données comprenant les informations relatives aux états de connectivité relayée $\varepsilon_{r(n)}$, $\varepsilon_{r(n+1)}$, $\varepsilon_{r(n+2)}$ et $\varepsilon_{r(n+3)}$ de chacun des dispositifs du système 10. La table de données comprend également :

- les informations relatives aux états de connectivité directe $\varepsilon_{d(n\leftrightarrow n+1)}$, $\varepsilon_{d(n\leftrightarrow n+2)}$ et $\varepsilon_{d(n\leftrightarrow n+3)}$ des dispositifs 100-(n+1), 100-(n+2) et 100-(n+3) du système 10 avec le dispositif 100-n, mises à jour à chaque réception de message de connectivité relayé $\mathcal{M}_{\mathcal{T}(n)}$;

- les informations relatives aux états de connectivité directe $\varepsilon_{d(n+1\leftrightarrow n)}$, $\varepsilon_{d(n+1\leftrightarrow n+2)}$ et $\varepsilon_{d(n+1\leftrightarrow n+3)}$ des dispositifs 100-n, 100-(n+2) et 100-(n+3) du système 10 avec le dispositif 100-(n+1), mises à jour à chaque réception de message de connectivité relayé $\mathcal{M}_{\mathcal{T}(n+1)}$;

- les informations relatives aux états de connectivité directe $\varepsilon_{d(n+2\leftrightarrow n)}$, $\varepsilon_{d(n+2\leftrightarrow n+1)}$ et $\varepsilon_{d(n+2\leftrightarrow n+3)}$ des dispositifs 100-n, 100-(n+1) et 100-(n+3) du système 10 avec le dispositif 100-(n+2), mises à jour à chaque réception de message de connectivité relayé $\mathcal{M}_{\mathcal{T}(n+2)}$; et

- les informations relatives aux états de connectivité directe $\varepsilon_{d(n+3\leftrightarrow n)}$, $\varepsilon_{d(n+3\leftrightarrow n+1)}$ et $\varepsilon_{d(n+3\leftrightarrow n+2)}$ des dispositifs 100-n, 100-(n+1) et 100-(n+2) du système 10 avec le dispositif 100-(n+3), mises à jour à chaque réception de message de connectivité relayé $\mathcal{M}_{\mathcal{T}(n+3)}$.

Ainsi, bien qu'un dispositif 100-h agencé uniquement à portée radio directe ne puisse pas transmettre de message de connectivité relayé $\mathcal{M}_{\mathcal{T}(h)}$, la matrice de connectivité globale $\tau$ comprend des informations relatives à l'état des liaisons de communication directes des dispositifs 100-k « en ligne » et agencés à portée radio directe du dispositif 100-h, via les états de connectivité directe $\varepsilon_{d(k\leftrightarrow h)}$ associés, mis à jour à chaque réception des messages de connectivité relayé $\mathcal{M}_{\mathcal{T}(k)}$.

En outre, chacun des états de connectivité (relayé et/ou directe) de la matrice de connectivité globale T peut être associé à un ou plusieurs horodatages respectifs (non représentés sur la figure 5). Un tel horodatage peut être un horodatage lié aux états de connectivité directe $t_{\tau(h)}$ et $t_{\tau(k)}$, et/ou un horodatage lié à la réception du message de connectivité relayé $t_{\tau(h)}$ et $t_{\tau(k)}$.

Dans des modes de réalisation, le centre de communication 210 (via l'application MCX par exemple) peut être configuré pour déterminer (i.e. sélectionner) le ou les équipements de supervision 400 parmi l'ensemble des dispositifs 100-n du système, selon différents critères de détermination et à partir de la matrice de connectivité globale T.

Pour déterminer un équipement de supervision 400, un premier critère de détermination peut être l'accès au réseau d'interconnexion 200. Ainsi, un équipement de supervision 400 peut être défini comme étant l'un des dispositifs de communication sélectionné parmi le sous-ensemble $E_{\mathcal{K}}$ de $\mathcal{K}$ dispositifs 100-k du système 10, i.e. connectés au réseau d'interconnexion 200 et ayant une portée radio directe non nulle. Le sous-ensemble $E_{\mathcal{K}}$ peut être défini par l'expression (04) suivante :

$$E_{\mathcal{K}} = \left\{ i_{(k)} \in E \middle| \left( \mathcal{E}_{r(k)} = 1 \right) \cap \left( \mathcal{E}_{d(k\leftrightarrow n)} = 1, \exists i_{(n)} \in E \right) \right\} \qquad (04)$$

Pour déterminer un équipement de supervision 400, un deuxième critère de détermination peut être le nombre de dispositifs « hors ligne » 100-h à portée radio directe auxquels un dispositif de communication peut être associé. Ainsi, un équipement de supervision 400 peut être agencé de manière à avoir le plus de terminaux « hors ligne » à portée radio directe. Par exemple et sans limitation, l'équipement de supervision 400 peut être un dispositif de communication 100-k « en ligne » du système 10 comprenant le plus grand nombre d'états de connectivité directe $\varepsilon_{d(k\leftrightarrow h)}$ = 1, les états de connectivité directe $\varepsilon_{d(k\leftrightarrow h)}$ étant associés aux liaisons de communication sans fil directe du dispositif 100-k « en ligne » avec un dispositifs 100-h « hors ligne » du système 10.

Le nombre d'états de connectivité directe $\varepsilon_{d(k\leftrightarrow h)}$ = 1 d'un dispositif 100-k peut être noté $\chi_{d(k)}$ et peut être défini par l'équation (05) suivante :

$$\chi_{d(k)} = \sum_h \mathcal{E}_{d(k \leftrightarrow h)} \ , \ \forall i_{(h)} \in E_{\mathcal{H}} \ \text{ et } \exists i_{(k)} \in E_{\mathcal{K}} \tag{05}$$

Dans l'équation (05) le sous-ensemble $E_{\mathcal{H}}$ peut être défini par l'expression (06) suivante :

$$E_{\mathcal{H}} = \left\{ i_{(h)} \in E \middle| \left( \mathcal{E}_{r(k)} = 0 \right) \cap \left( \mathcal{E}_{d(k \leftrightarrow n)} = 1 \ , \ \exists i_{(n)} \in E \right) \right\} \tag{06}$$

Par conséquent, chaque identifiant $i_{(k)}$ du sous-ensemble $E_{\mathcal{K}}$ peut donc être associé à un nombre d'états de connectivité directe $\chi_{d(k)}$. L'homme du métier comprendra aisément que ce nombre d'états de connectivité directe $\chi_d$ peut être calculé pour chacun des dispositifs 100-n du système 10 tel que :

$$\chi_{d(k)} \geq 1, \ \forall i_{(k)} \in E_{\mathcal{K}} \tag{07},$$

$$\chi_{d(h)} \geq 1, \ \forall i_{(h)} \in E_{\mathcal{H}} \tag{08},$$

$$\chi_{d(z)} = \chi_{d(y)} = 0, \ \forall i_{(z)} \in E_z \qquad \text{et } \exists i_{(y)} \in E_y \tag{09},$$

Dans des modes de réalisation, les nombres d'états de connectivité directe $\chi_{d(k)}$ peuvent être ordonnés hiérarchiquement entre eux, selon une liste de connexions, du plus grand nombre d'états de connectivité directe noté $\chi_{max}$ au plus petit nombre d'états de connectivité directe noté $\chi_{min}$.

Ainsi, l'identifiant de l'équipement de supervision 400, noté $i_{(400)}$, peut être sélectionné parmi le ou les identifiants $i_{(k)}$ d'un dispositif 100-k dans le sous-ensemble $E_{\mathcal{K}}$ associés au nombre d'états de connectivité directe maximal $\chi_{max}$, c'est-à-dire tel que :

$$i_{(400)} = i_{(k)}, \ \exists i_{(k)} \in E_{\mathcal{K}} \middle| \left( \chi_{d(k)} = \chi_{max} \right) \tag{10}$$

Il est à noter que plusieurs dispositifs 100-k dans le sous-ensemble $E_{\mathcal{K}}$ peuvent éventuellement être associés au nombre d'états de connectivité directe maximal $\chi_{d(k)} = \chi_{max}$.

Dans des modes de réalisation, un équipement de supervision 400 peut être défini comme « le dispositif 100-n le plus au centre du système 10 ». Par exemple et sans limitations, la détermination du dispositif 100-n le plus au centre du système 10 peut être mise en œuvre selon un autre critère de détermination, à partir de la cartographie du positionnement des différents dispositifs 100-n du système définies avec les données de géolocalisation des identifiants $i_{(n)}$ de la matrice de connectivité globale T.

Dans certains mode de réalisation, le système de communication sans fil 10 peut comprendre un dispositif de connexion relayé (noté par exemple 100-r et associé à un identifiant $i_{(r)}$ défini parmi l'ensemble des dispositifs 100-n du système). Ce dispositif de connexion relayé 100-r est associé à un état de connectivité relayée $\varepsilon_{r(k)} = 1$ qui ne peut pas être modifié tout au long de la mission. Par exemple, un dispositif de connexion relayé 100-r peut être un « chef d'agrès » (encore appelé « responsable de l'agrégation » ou « responsable du groupe de communication » ou encore « nœud de communication ») qui doit rester connecté au réseau 200 en toutes circonstances. Ainsi, la détermination de l'équipement de supervision 400 peut être mise en œuvre selon un critère de détermination additionnel, à partir de l'état de connectivité directe $\varepsilon_{d(k \rightarrow r)}$ relié au dispositif de connexion relayé 100-r du système 10. L'identifiant de l'équipement de supervision 400 $i_{(400)}$ peut être sélectionné parmi le ou les identifiants $i_{(k)}$ d'un dispositif 100-k dans le sous-ensemble $E_{\mathcal{K}}$ associés à l'état de connectivité directe $\varepsilon_{d(k \rightarrow r)} = 1$, c'est-à-dire tel que :

$$i_{(400)} = i_{(k)}, \ \exists i_{(k)} \in E_{\mathcal{K}} \big| \big( \mathcal{X}_{d(k)} = \mathcal{X}_{max} \big) \cap \big( \mathcal{E}_{d(k \leftrightarrow r)} = 1, \ i_{(r)} \in E \big) \qquad (11)$$

Dans un mode de réalisation, pour déterminer un équipement de supervision 400, un troisième critère de détermination peut être défini à partir d'un ensemble de ressources noté

$$\mathcal{R}_{(k)}$$

et associé à chaque dispositif 100-k dans le sous-ensemble $E_{\mathcal{K}}$. Par exemple et sans limitations, un ensemble de ressources $E_{\mathcal{H}}$ peut comprendre des caractéristiques physiques et/ou virtuelles notées chacune

$$\mathcal{R}_{(k)}^{j}.$$

Certaines caractéristiques physiques peuvent comprendre, sans limitation, des capacités matérielles et/ou logicielles, des capacités de traitement de données, des capacités de type calcul (CPU), et/ou de type mémoire de travail, et/ou de type stockage de masse, des capacités de batterie, des capacités pour l'intelligence artificielle (GPU), des capacités de stockage d'informations secrètes, des capacités de garantie de communication réseau (antennes, puissances d'émission radio et/ou couverture réseau 200, charge/batterie, capacité radio, etc.), des capacités opérationnelles (hiérarchiques selon le rang de l'utilisateur par exemple) ou tout autre type de ressource nécessaire (par exemple de services existants supportés par le application MCX sur le module de communication directe 1060, i.e. Smartphone), etc. Certaines caractéristiques virtuelles peuvent être des briques virtualisées correspondant chacune à des capacités de traitement de données spécifiques de caractéristiques physiques (espace disque, ou encore des caractéristiques opérationnelles telles qu'une caractéristique de localisation déterminant une position dangereuse ou pas). Certaines capacités virtuelles peuvent être définies par exemple en termes de cycles d'exécution par unité de temps, de nombre de cœurs pour un temps donné, et/ou d'unités de volume (octets), d'opérations de lecture et écriture par unité de temps, et/ou d'unités de volume sur temps (bit par second).

L'homme du métier comprendra aisément que chaque dispositif 100-n du système 10 peut être associé à un ensemble de ressources noté $R_{(n)}$ comprenant les caractéristiques physiques et/ou virtuelles

$$\mathcal{R}_{(n)}^{j}.$$

L'ensemble des ressources

$$\mathcal{R}_{(k)}$$

peut être une matrice définie par rapport aux différentes caractéristiques physiques et/ou virtuelles

$$\mathcal{R}_{(k)}^{j}.$$

La nature et/ou le nombre total $J$ de caractéristiques physiques et/ou virtuelles peuvent être déterminées par exemple au début d'une mission ou d'une intervention spécifique menée par les utilisateurs du système 10. La matrice

$$\mathcal{R}_{(k)}$$

peut être définie par l'équation (12) :

$$\mathcal{R}_{(k)} = \left\{ \mathcal{R}^j_{(k)} \right\}, \forall j \in [1, \ldots J], \; \exists i_{(k)} \in E_{\mathcal{K}} \tag{12}$$

En outre, selon des modes de réalisation, chaque caractéristique physique et/ou virtuelle

$$\mathcal{R}^j_{(k)}$$

associée à un dispositif 100-k à considérer par le système 10, peut être définie en fonction de paramètres de ressources selon l'expression (13) suivante :

$$\mathcal{R}^j_{(k)} = \left\{ x^j_{(k)}, \; p^j_{(k)} \right\} \tag{13}$$

Dans l'expression (13), le terme

$$x^j_{(k)}$$

peut être par exemple un facteur de disponibilité de la caractéristique physique et/ou virtuelle

$$\mathcal{R}^j_{(k)}.$$

Selon certains modes de réalisation, le facteur de disponibilité

$$x^j_{(k)}$$

peut être un nombre binaire égal à '0' si la ressource $\mathcal{R}^j$ n'est pas disponible pour le dispositif 100-k (au cours de la mission ou à un instant t), ou un nombre binaire égal à '1' si la ressource $\mathcal{R}^j$ est disponible pour le dispositif 100-k (au cours de la mission ou à un instant t). Dans d'autres modes de réalisation, le facteur de disponibilité $x^j_{(k)}$ peut être un nombre flottant compris entre '0' et '1', ou un pourcentage compris entre '0%' et '100%' décrivant la disponibilité de la ressource $\mathcal{R}^j$ pour le dispositif 100-k (au début de la mission, en cours de mission et/ou à un instant t).

Dans l'expression (13), le terme

$$p^j_{(k)}$$

peut être par exemple une valeur arbitraire d'utilité et/ou d'importance de la ressource en général $\mathcal{R}^j$ déterminée par exemple au début d'une mission ou d'une intervention spécifique menée par les utilisateurs du système 10. En particulier, les $J$ caractéristiques physiques et/ou virtuelles peuvent être ordonnées hiérarchiquement entre elles, selon une liste d'importance des ressources, de la ressource la plus importante $R_{max}$ pour un dispositif 100-k à la ressource la moins importante $R_{min}$ pour ce dispositif 100-k. Dans la liste d'importance des ressources, la valeur arbitraire d'utilité et/ou d'importance d'une ressource

$$p^j_{(k)}$$

peut être déterminée au début de la mission, et peut être éventuellement modifiée au cours de la mission, à un instant $t$.

Dans un mode de réalisation, une valeur arbitraire d'utilité et/ou une valeur d'importance d'une ressource peut être considérée inhérente à la ressource $\mathcal{R}^j$. Dans un autre mode de réalisation, la valeur arbitraire d'utilité et/ou la valeur d'importance de la ressource $\mathcal{R}^j$ peut être adaptée en fonction du contexte opérationnel.

Dans certains modes de réalisation, un ou plusieurs facteurs de disponibilité

$$x^j_{(k)}$$

et/ou une ou plusieurs valeurs arbitraire d'utilité et/ou d'importance

$$p^j_{(k)}$$

peuvent être déterminés (i.e. mis à jour) à chaque mise à jour des états de connectivité relayée $\varepsilon_{r(n)}$ et/ou des états de connectivité directe $\varepsilon_{d(n\leftrightarrow n+1)}$ (et donc de la matrice de connectivité globale $\tau$).

Par conséquent, pour déterminer un équipement de supervision 400, le troisième critère de détermination peut être défini à partir de la détermination d'une valeur de « poids » (i.e. ou calcul de poids) notée alors $\kappa_{(k)}$. La valeur de poids est associé à chaque dispositif 100-k d'identifiant $i_{(k)}$ dans le sous-ensemble $E_{\mathcal{K}}$ et prend en compte l'ensemble des ressources $\mathcal{R}_{(k)}$. La valeur de poids $\kappa_{(k)}$ des $J$ caractéristiques physiques et/ou virtuelles pour un dispositif 100-k peut être définie par exemple selon l'équation (14) suivante :

$$\kappa_{(k)} = \sum_{j=1}^{J} x^j_{(k)} \cdot p^j_{(k)}, \ \exists i_{(k)} \in E_{\mathcal{K}} \tag{14}$$

En outre, dans certains modes de réalisation, un terme additionnel noté

$$\omega^j_{(k\leftrightarrow h)}$$

peut être ajouté dans l'expression (13) et l'équation (14), correspondant à une valeur arbitraire d'utilité et/ou d'importance de la ressource en général $\mathcal{R}^j$ d'un dispositif 100-k pour un dispositif 100-h « hors ligne » et à portée radio directe en particulier. Par exemple, le terme additionnel

$$\omega^j_{(k\leftrightarrow h)}$$

peut faire référence à des demandes de services d'un nombre d'utilisateurs intéressés par leur contenu et nécessitant le relai au réseau 200 d'un message réceptionné en mode direct.

Selon certains modes de réalisation, le centre de communication 210 (via l'application MCX par exemple) peut être configuré pour transmettre une requête d'informations sur les ressources via le réseau d'interconnexion 200. Dans ce cas, chaque dispositif 100-k d'identifiant $i_{(k)}$ peut être configuré pour préparer et envoyer un message réponse $\mathcal{M}_{\mathcal{R}(k)}$ à la requête d'informations sur les ressources. Un message réponse $\mathcal{M}_{\mathcal{R}(k)}$ associé à l'identifiant $i_{(k)}$ peut comprendre par exemple le poids $\kappa_{(k)}$ calculé (ou déterminé) des $J$ caractéristiques physiques et/ou virtuelles pour le dispositif 100-k et/ou directement la matrice des ressources $\mathcal{R}_{(k)}$ associée à chaque dispositif 100-k.

Le centre de communication 210 (via l'application MCX par exemple) peut être en outre configuré pour recevoir les $\mathcal{K}$ message réponse $\mathcal{M}_{\mathcal{R}(k)}$ ¦, en réponse à la requête d'informations sur les ressources et pour ordonner hiérarchiquement les différents poids $\kappa_{(k)}$ entre eux selon une liste de poids du plus grand $K_{max}$ au plus petit $K_{min}$. Dans

la liste de poids, $K_{max}$ est la valeur de poids maximale d'un dispositif 100-k et $K_{min}$ est la valeur de poids minimale d'un dispositif 100-k (i.e. déterminées au cours de la mission ou à un instant t). L'identifiant de l'équipement de supervision 400 $i_{(400)}$ peut ainsi être sélectionné parmi le ou les identifiants $i_{(k)}$ d'un dispositif 100-k dans le sous-ensemble $E_{\mathcal{K}}$ associés au poids $\kappa_{(k)}$ le plus élevé, c'est-à-dire tel que :

$$i_{(400)} = i_{(k)}, \ \exists i_{(k)} \in E_{\mathcal{K}} \big| \big( \kappa_{(k)} = K_{max} \big) \tag{15}$$

ou encore

$$i_{(400)} = i_{(k)}, \ \exists i_{(k)} \in E_{\mathcal{K}} \big| \big( \chi_{d(k)} = \mathcal{X}_{max} \big) \cap \big( \kappa_{(k)} = K_{max} \big) \tag{16}$$

L'homme du métier comprendra aisément que l'invention n'est pas limitée à de tels modes de réalisation. Par exemple, les équations (11) et (15) ou (16) peuvent par exemple être combinées.

Dans certains modes de réalisation, le centre de communication 210 peut être en outre configuré pour ordonner hiérarchiquement (i.e. au début de la mission et/ou au cours de la mission, à un instant t) les différents dispositifs 100-k du système 10 entre eux selon une liste de dispositifs prioritaires, à partir de scores attribués à chaque dispositif 100-k définis selon différents critères de détermination. Dans des modes de réalisation, la liste de dispositifs prioritaires peut être ordonnée selon les scores associés aux dispositifs 100-k . En particulier, la liste de dispositifs prioritaires peut être ordonnée par ordre croissant ou décroissant des scores associés aux dispositifs 100-k. Ainsi, selon un ordonnancement de la liste par ordre décroissant, dans la liste de dispositifs prioritaires, les dispositifs 100-k sont rangés du score maximal d'un dispositif 100-k $PRIO_{max}$ au score minimal $PRIO_{min}$. Avantageusement, à un instant $t$, un unique dispositif 100-k d'identifiant $i_{(k)}$ est associé au score maximal $PRIO_{max}$ et est choisi comme étant l'équipement de supervision 400 tel que $i_{(k)} = i_{(400)}$ .

Dans un mode de réalisation, à un instant $t$ donné, un ou plusieurs dispositifs 100-(k-1) d'identifiants $i_{(k-1)}$ associés au deuxième score maximal $PRIO_{max-1}$ peuvent être choisis comme étant des « dispositifs de secours de supervision » de l'équipement de supervision 400. Un dispositif de secours de supervision 100-(k-1) peut être configuré pour être l'équipement de supervision 400 si par exemple le dispositif 100-k d'identifiant $i_{(k)}$ venait à passer « hors ligne » avant que le système n'ait pu effectuer une nouvelle détermination d'un équipement de supervision 400.

Selon un autre mode de réalisation, l'équipement de supervision 400 peut être à portée radio directe d'un sous-ensemble seulement de $\mathcal{H}1$ dispositifs 100-h, noté alors $E_{\mathcal{H}1}$, tel que :

$$\mathcal{H} > \mathcal{H}1 \geq 1 \ \text{ et } \ E_{\mathcal{H}1} = \big\{ i_{(h1)} \in E_{\mathcal{H}} \big| \big( \mathcal{E}_{d(h1 \leftrightarrow 400)} = 1, \exists i_{(400)} \in E \big) \big\} \tag{17}$$

Par conséquent, un autre sous-ensemble de $\mathcal{H}2$ dispositifs 100-h, noté alors $E_{\mathcal{H}2}$, peut être défini tel que :

$$\mathcal{H}2 + \mathcal{H}1 = \mathcal{H} \ \text{ et } \ E_{\mathcal{H}2} = \big\{ i_{(h2)} \in E_{\mathcal{H}} \big| \big( \mathcal{E}_{d(h2 \leftrightarrow 400)} = 0, \exists i_{(400)} \in E_{\mathcal{K}} \big) \big\} \tag{18}$$

A ce même instant $t$, pendant que le dispositif 100-k d'identifiant $i_{(k)}$ est choisi comme étant l'équipement de supervision 400, une deuxième liste de dispositifs prioritaires peut être déterminée à partir des identifiants $i_{(k2)}$ de dispositifs 100-k2 compris dans un sous-ensemble $E_{\mathcal{K}2}$ défini par l'expression (19) suivante :

$$E_{\mathcal{K}2} = \big\{ i_{(k2)} \in E_{\mathcal{K}} \big| \big( \mathcal{E}_{r(k2)} = 1 \big) \cap \big( \mathcal{E}_{d(k2 \leftrightarrow h)} = 1, \exists i_{(h2)} \in E_{\mathcal{H}2} \big) \big\} \tag{19}$$

La deuxième liste de dispositifs prioritaires peut être déterminée à partir de l'ordonnancement hiérarchique selon le score des différents dispositifs 100-k2, du score maximal $PRIO_{max2}$ au score minimal $PRIO_{min2}$. Ainsi, un dispositif 100-k2 d'identifiant $i_{(k2)}$ associé au score maximal $PRIO_{max2}$ peut être choisi dispositif suppléant de supervision de l'équipement de supervision 400 pour les dispositifs 100-h hors portée radio direct de l'équipement de supervision 400.

L'homme du métier comprendra que une ou plusieurs autres listes de dispositifs prioritaires additionnelles peuvent être générées afin d'attribuer un nombre requis de dispositif suppléants de supervision, de manière à couvrir (i.e. attribuer) l'ensemble des dispositifs 100-h du système 10, ce qui permet de garantir une continuité de service des communications de mode direct et d'éviter l'isolement de certains dispositifs au réseau 200.

La détermination de l'équipement de supervision 400 et/ou la détermination de dispositifs de secours de supervision et/ou la détermination de dispositif suppléants de supervision peuvent être définies selon une fréquence de détermination $f_d$ prédéfinie telle que $f_d = 1/\tau_d$ et/ou à chaque mise à jour de la matrice de connectivité globale $\tau$.

Selon des modes de réalisation, l'équipement de supervision 400 peut être configuré recevoir les messages de communication directes $\mathcal{M}_{d(h)}$ de dispositifs de communication 100-h « hors ligne » agencé à sa portée radio directe, puis pour répéter certains des messages $\mathcal{M}_{d(h)}$ par l'intermédiaire du mode de communication relayée, de manière à les transmettre par exemple à d'autres dispositifs connectés au réseau d'interconnexion 200 et hors de portée radio directe du dispositif 100-y. Dans ce cas, suivant une commande de répétition donnée, l'équipement de supervision 400 (par exemple via un module de gestion 1040) peut être en outre configuré pour déterminer un message dit « message à répéter » de communication relayée, noté

$$\mathcal{M}_{r(400)'}^{(h)}$$

, à partir du message reçu de communication directe $\mathcal{M}_{d(h)}$ transmis par le dispositif de communication 100-h, de l'identifiant unique $i_{(400)}$ de l'équipement de supervision 400 et de l'identifiant déterminé $i_{(h)}$ associé au dispositif de communication 100-h. L'équipement de supervision 400 peut alors être configuré pour émettre, uniquement selon le mode de communication relayée (i.e. uniquement via le module de communication relayée 1080), le message à répéter de communication relayée

$$\mathcal{M}_{r(400)}^{(h)}.$$

.

Dans des modes de réalisation, l'équipement de supervision 400 peut être configuré pour déterminer une liste de contrôle comprenant au moins un et/ou l'ensemble des $\mathcal{H}$ et $\mathcal{Z}$ dispositifs « hors ligne » 100-h et 100-z du système 10 (compris dans les sous-ensembles $E_{\mathcal{H}}$ et $E_{\mathcal{Z}}$), la liste de contrôle étant déterminée à partir de la matrice de connectivité globale T. L'équipement de supervision 400 peut être en outre configuré pour déterminer un message de supervision noté $\mathcal{M}_{(400)}$ à partir de la liste de contrôle, puis pour émettre le message de supervision $\mathcal{M}_{(400)}$ uniquement selon le mode de communication direct (par exemple uniquement via le module de communication directe 1060 de l'équipement de supervision 400 si c'est un dispositif de communication). Le message de supervision $\mathcal{M}_{(400)}$ peut être émis de manière répétée selon des paramètres d'émission de supervision prédéfinie. Par exemple, un paramètre d'émission de supervision peut être défini par la répétition de manière régulière de l'émission du message de supervision $\mathcal{M}_{(400)}$ en fonction d'une fréquence temporelle de supervision $f_s$ prédéfinie ($f_s$ prédéfinie telle que $f_s = 1/\tau_s$) et en utilisant une horloge interne prévue dans le module 1040. L'équipement de supervision 400 peut en outre comprendre un autre paramètre d'émission de supervision qui peut être un paramètre de mise à jour de la liste de contrôle (via la mise à jour préalable de la matrice de connectivité globale $\tau$) pour générer l'émission du message de supervision $\mathcal{M}_{(400)}$ réactualisé.

Dans des modes de réalisation, l'équipement de supervision 400 peut être un dispositif 100-n et comprendre une unité de supervision 1046. L'unité de supervision 1046 de l'équipement de supervision 400 peut comprendre une horloge de supervision (non représentée sur les figures) associée à l'horloge interne prévue dans le module de gestion 1040. En outre, l'horloge de supervision de l'équipement de supervision 400 peut être liée à la supervision d'un ou plusieurs dispositifs 100-n déconnectés du réseau 200. Par exemple et de façon non limitative, l'horloge de supervision de l'équipement de supervision 400 peut être mise à 0 ($\tau = 0$) et activée lorsqu'un dispositif 100-n est déconnecté du réseau 200.

Selon des modes de réalisation, l'horloge de supervision de l'équipement de supervision 400 peut également être initialisée en fonction d'une ou plusieurs valeurs associées à un ou plusieurs horodatages $t_{(n+1)}$ relatifs aux différents états de connectivité direct $\varepsilon_{d(h\leftrightarrow n+1)}$ et/ou des horodatages $t_{\tau(n)}$ relatifs aux matrices de connectivité élémentaires $\tau_{(n)}$ reçues. L'horloge de supervision de l'équipement de supervision 400 peut aussi être initialisée si un message de communication direct quelconque (i.e. $\mathcal{M}_{d(n)}$ ou $\mathcal{M}_{s(n)}$), émis par le dispositif 100-n déconnecté du réseau 200, est reçu par l'équipement de supervision 400. L'équipement de supervision 400 peut ainsi être configuré pour surveiller les communications directes associées au 'trafic naturel' de communication entre les différents dispositifs du système 10, et pour adapter l'émission du message de supervision $\mathcal{M}_{(400)}$ et/ou la fréquence temporelle de supervision $f_s$ en fonction de ce trafic naturel.

Dans des modes de réalisation, l'horloge de supervision de l'équipement de supervision 400 peut atteindre la valeur temporelle associée à la fréquence de supervision, tel que $\tau = \tau_s$, alors le message de supervision $\mathcal{M}_{(400)}$ est déterminé puis émis.

Dans des modes de réalisation, le message de supervision $\mathcal{M}_{(400)}$ peut être déterminé à partir des identifiants $i_{(h)}$ et $i_{(z)}$ de chaque dispositif de communication 100-h et 100-z de la liste de contrôle. Par exemple, et sans limitation, le message de supervision $\mathcal{M}_{(400)}$ peut comprendre chaque identifiant unique $i_{(h)}$ et $i_{(z)}$ associé à un indice de réponse compris entre 1 et ($\mathcal{H} + \mathcal{Z}$). Par exemple, cet indice de réponse peut être indiqué dans le message de supervision $\mathcal{M}_{(400)}$ ou déduit par traitement du message.

En particulier, l'ordre des identifiants dans la liste de contrôle (c'est-à-dire leur indice de réponse) peut dépendre de la durée de non-établissement de liaison de communication sans fil directe 110-n(n+1), une durée de non-établissement étant obtenue à partir des horodatages par exemple. L'équipement de supervision 400 peut ainsi être configuré pour déterminer la durée depuis laquelle un dispositif est non connecté au mode direct, et pour trier les identifiants des dispositifs non connectés au mode direct en fonction de cette durée déterminée. Par exemple, l'indice de réponse h égal à 1 peut être associé au dispositif non connecté au mode direct depuis la durée qui est la plus longue.

Selon des modes de réalisation, l'équipement de supervision 400 peut en outre être configuré pour effectuer une gestion des communications de groupes, effectuer des partages de contexte(s) optionnel(s), et/ou mettre en œuvre le partage de clés de cryptage des communications directes et/ou relayées entre une partie ou l'ensemble des différents dispositif 100-n.

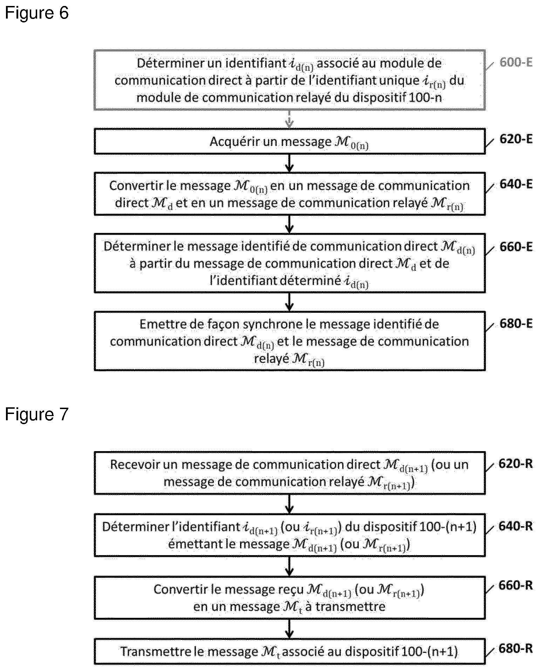

La figure 6 est un organigramme décrivant le procédé de gestion de communication sans fil critique, mis en œuvre par un dispositif de communication 100-n, pour l'émission d'un message, selon des modes de réalisation de l'invention.

A l'étape 600-E d'initialisation du dispositif de communication 100-n, l'identifiant $i_{d(n)}$ associé au module de communication directe 1060 du dispositif 100-n est déterminé à partir de l'identification unique $i_{r(n)}$ du module de communication relayée 1080 du dispositif 100-n.

A l'étape 620-E, le message $\mathcal{M}_{0(n)}$ est acquis via le module d'acquisition de message 1020.

A l'étape 640-E, le message $\mathcal{M}_{0(n)}$ est converti en un message de communication directe $\mathcal{M}_d$ en fonction du protocole de communication directe et en un message de communication relayée $\mathcal{M}_{r(n)}$ en fonction du protocole de communication relayée.

A l'étape 660-E, le message identifié de communication directe $\mathcal{M}_{d(n)}$ est déterminé à partir du message de communication directe $\mathcal{M}_d$ et de l'identifiant associé $i_{d(n)}$.

A l'étape 680-E, le message identifié de communication directe $\mathcal{M}_{d(n)}$ et le message de communication relayée $\mathcal{M}_{r(n)}$ sont transmis de façon synchrone (et donc par redondance) respectivement par l'intermédiaire du mode de communication directe par le module de communication directe 1060 et du mode de communication relayée par le module de communication relayée 1080.

L'homme du métier comprendra aisément que les étapes 640-E et 660-E peuvent être réalisées de manière simultanée et/ou selon un ordre différent, par exemple un ordre donné défini par le module de gestion 1040.

La figure 7 est un organigramme selon des modes de réalisation de l'invention décrivant des étapes du procédé de gestion de communication sans fil critique pour la réception d'un message, mis en œuvre par un dispositif de communication 100-n.

A l'étape 620-R, un message de communication directe $\mathcal{M}_{d(n+1)}$ (ou un message de communication relayée $\mathcal{M}_{r(n+1)}$) émis par un dispositif de communication 100-(n+1) est reçu par le dispositif de communication 100-n, par l'intermédiaire du mode de communication directe par le module de communication directe 1060 (et/ou du mode de communication relayée par le module de communication relayée 1080).

A l'étape 640-R, l'identifiant $i_{d(n+1)}$ (et/ou l'identifiant $i_{r(n+1)}$) du dispositif de communication 100-(n+1) est déterminé à partir de données d'identification du message reçu $\mathcal{M}_{d(n+1)}$ (ou $\mathcal{M}_{r(n+1)}$).

A l'étape 660-R, le message reçu $\mathcal{M}_{d(n+1)}$ (et/ou $\mathcal{M}_{r(n+1)}$) est converti en un message $\mathcal{M}_t$ à transmettre à l'utilisateur U-n.

A l'étape 680-R, le message $\mathcal{M}_t$ est transmis via le module d'acquisition de message 1020.

L'homme du métier comprendra aisément que les étapes 640-R et 660-R peuvent être réalisées de manière simultanée et/ou selon un ordre différent, par exemple un ordre défini par le module de gestion 1040.

A titre de simplification, les étapes précédentes d'émission de messages identifiés de communication directe $\mathcal{M}_{d(n)}$ peuvent constituer une étape de communication directe 1060-S mise en œuvre dans chaque dispositif de communication 100-n selon un protocole de communication directe. Similairement, les étapes précédentes de réception de messages identifiés de communication directe $\mathcal{M}_{d(n+1)}$ peuvent constituer dans l'étape de communication directe 1060-S.

A titre de simplification, les étapes précédentes d'émission de messages de communication relayée $\mathcal{M}_{r(n)}$ peuvent constituer une étape de communication relayée 1080-S mise en œuvre dans chaque dispositif de communication 100-n fonctionnant selon un protocole de communication relayée via un réseau d'interconnexion 200 (mis en œuvre dans le système de communication). Similairement, les étapes précédentes de réception de messages de communication relayée $\mathcal{M}_{r(n)}$ peuvent constituer dans l'étape de communication directe 1060-S.

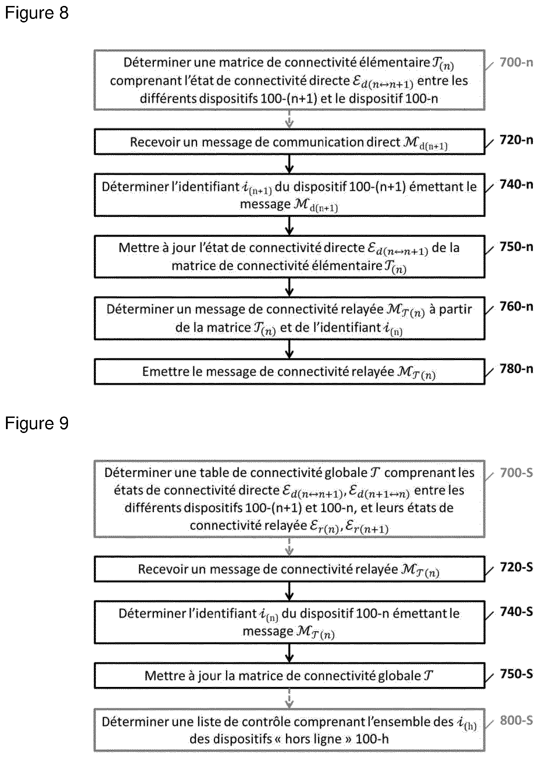

La figure 8 est un organigramme décrivant des sous-étapes du procédé de gestion de communication sans fil critique, mis en œuvre par un dispositif de communication 100-n, pour la supervision de la liaison de communication sans fil directe 110-n(n+1) avec les autres dispositifs de communication 100-(n+1) du système 10, selon des modes de réalisation de l'invention.

A l'étape 700-n, qui peut être une étape d'initialisation du dispositif de communication 100-n par exemple, la matrice de connectivité élémentaire $\tau_{(n)}$ est déterminée à partir de la matrice de connectivité relayée $\tau_r$ et de l'ensemble des états de connectivité directe $\varepsilon_{d(n\leftrightarrow n+1)}$ entre les dispositifs 100-(n+1) et le dispositif 100-n.

A l'étape 720-n, un message de communication directe $\mathcal{M}_{d(n+1)}$ émis par un dispositif de communication 100-(n+1) est reçu par le dispositif de communication 100-n, par l'intermédiaire du mode de communication directe par le module de communication directe 1060.

A l'étape 740-n, l'identifiant $i_{d(n+1)}$ du dispositif de communication 100-(n+1) est déterminé à partir de données d'identification du message reçu $\mathcal{M}_{d(n+1)}$.

A l'étape 750-n, l'état de connectivité direct $\varepsilon_{d(n\leftrightarrow n+1)}$ entre le dispositif 100-(n+1) et le dispositif 100-n est mis à jour dans la matrice de connectivité élémentaire $\tau_{(n)}$.

A l'étape 760-n, le message de connectivité relayée $\mathcal{M}_{\mathcal{T}(n)}$ est déterminé à partir de la matrice de connectivité élémentaire $\tau_{(n)}$ et de l'identifiant unique $i_{(n)}$ du dispositif 100-n.

A l'étape 780-n, le message de connectivité relayée $\mathcal{M}_{\mathcal{T}(n)}$ est émis par l'intermédiaire du mode de communication directe par le module de communication directe 1060 du dispositif 100-n.

L'homme du métier comprendra aisément que les étapes 740-n, 750-n, et 760-n peuvent être réalisées de manière simultanée et/ou selon un ordre différent, par exemple un ordre défini par le module de gestion 1040.

L'homme du métier comprendra aisément que l'étape de communication relayée 1080-S d'un dispositif de communication 100-n est associée à un état de connectivité relayée $\varepsilon_{r(n)}$ (correspondant à un état de connexion du dispositif 100-n avec le réseau d'interconnexion 200. Similairement, l'étape de communication directe 1060-S d'un dispositif de communication 100-n est associée à ($\mathcal{N}$ - 1) états de connectivité directe $\varepsilon_{d(n\leftrightarrow n+1)}$ (correspondant aux états de liaison de communication sans fil direct du dispositif 100-n avec chacun des autres dispositifs 100-(n+1) de l'ensemble de dispositifs du système 10.

La figure 9 est un organigramme décrivant des sous-étapes du procédé de gestion de communication sans fil critique, mis en œuvre par un équipement de supervision 400, pour la supervision des connexions au réseau 200 des différents dispositifs de communication 100-n et 100-(n+1) du système 10 et de leurs états de connectivité directe entre eux, selon des modes de réalisation de l'invention.

A l'étape 700-S, qui peut être une étape d'initialisation de l'équipement de supervision 400 par exemple, la matrice de connectivité globale $\tau$ est déterminée à partir des connexions au réseau 200 des différents dispositifs de communication 100-n et 100-(n+1) du système 10, et de l'ensemble des états de connectivité directe ($\varepsilon_{d(n \leftrightarrow n+1)}$ et $\varepsilon_{d(n+1 \leftrightarrow n)}$) entre les dispositifs 100-(n+1) et le dispositif 100-n.

A l'étape 720-S, un message de connectivité relayée $\mathcal{M}_{\mathcal{T}(n)}$ émis par un dispositif de communication 100-n est reçu par l'équipement de supervision 400, par l'intermédiaire du mode de communication relayée.

A l'étape 740-S, l'identifiant $i_{d(n)}$ du dispositif de communication 100-n est déterminé à partir de données d'identification du message reçu $\mathcal{M}_{\mathcal{T}(n)}$.

A l'étape 750-S, la matrice de connectivité globale T est mise à jour.

A l'étape 800-S, qui peut également être une étape d'initialisation de l'équipement de supervision 400 par exemple, la liste de contrôle comprenant au moins un identifiant parmi les identifiants $i_{(h)}$ et $i_{(z)}$ des sous-ensembles $E_{\mathcal{H}}$ et $E_{\mathcal{Z}}$ des dispositifs « hors ligne » 100-h et 100-z est déterminée.

L'homme du métier comprendra aisément que les étapes 720-S, 740-S, 750-S, et 800-S peuvent être réalisées de manière simultanée et/ou selon un ordre différent, par exemple un ordre défini par l'équipement de supervision 400.

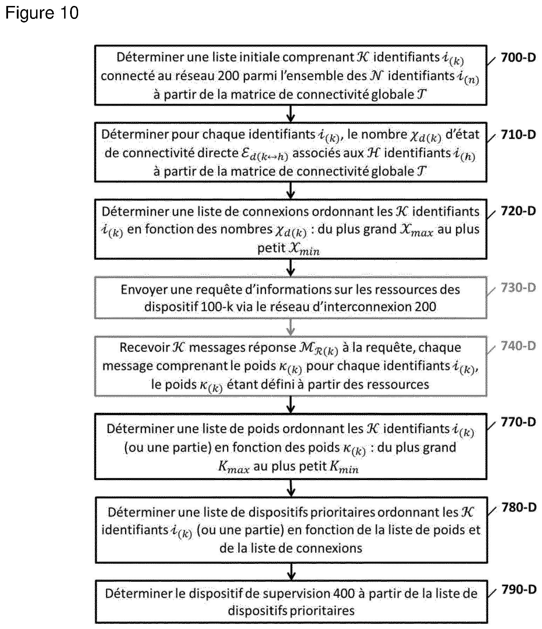

La figure 10 est un organigramme selon des modes de réalisation de l'invention décrivant de sous-étapes du procédé de gestion de communication sans fil critique, mis en œuvre par le système 10, pour la détermination de l'équipement de supervision 400.

A l'étape 700-D, une liste initiale comprenant $\mathcal{K}$ identifiants $i_{(k)}$ associés à $\mathcal{K}$ dispositifs de communication connectés au réseau 200 est déterminée. La liste initiale est notamment déterminée à partir de l'ensemble des $\mathcal{N}$ identifiants $i_{(n)}$ des dispositifs 100-n du système et en fonction des états de connectivité relayée $\varepsilon_{r(n)}$ et des états de connectivité directe $\varepsilon_{d(n \leftrightarrow n+1)}$ (c'est-à-dire en fonction de la matrice de connectivité globale $\tau$). La liste initiale des $\mathcal{K}$ identifiants $i_{(k)}$ peut être définie telle que décrit par l'expression (03).

A l'étape 710-D, pour chaque identifiant $i_{(k)}$ (associé à un dispositif de communication 100-k connecté au réseau 200), un nombre d'états de connectivité directe $\chi_{d(k)}$ est déterminé. Le nombre d'état de connectivité directe $\chi_{d(k)}$ est notamment déterminé à partir des états de connectivité directe $\varepsilon_{d(k \leftrightarrow h)}$ (c'est-à-dire à partir de la matrice de connectivité globale T). Un état de connectivité directe $\varepsilon_{d(k \leftrightarrow h)}$ correspond à l'état de liaison de communication sans fil directe d'un dispositif de communication 100-k connecté au réseau 200 avec un dispositif de communication 100-h non connecté au réseau 200. Une liste de $\mathcal{H}$ identifiants $i_{(h)}$ associés à $\mathcal{H}$ dispositifs de communication non connectés au réseau 200 peut être définie telle que décrit par l'expression (05).

A l'étape 720-D, une liste de connexions est déterminée à partir de l'ordonnancement hiérarchique des $\mathcal{K}$ identifiants $i_{(k)}$ en fonction des nombres d'état de connectivité directe $\chi_{d(k)}$, d'un nombre d'état de connectivité directe maximal $\chi_{max}$ à un nombre d'état de connectivité directe minimal $\chi_{min}$.

A l'étape 730-D, une requête d'informations sur les ressources de chaque dispositif 100-k peut être envoyée via le réseau d'interconnexion 200. Un message de réponse $\mathcal{M}_{\mathcal{R}(k)}$ à cette requête peut ensuite être préparé (déterminé) par chaque dispositif 100-k connecté au réseau 200 d'identifiant $i_{(k)}$, à partir des informations sur les ressources demandées et/ou d'une valeur de poids $\kappa_{(k)}$ associée. Le message de réponse $\mathcal{M}_{\mathcal{R}(k)}$ à la requête d'informations sur les ressources peut ensuite être transmis au réseau 200 par chaque dispositif 100-k connecté au réseau 200.

A l'étape 740-D, les $\mathcal{K}$ messages réponse $\mathcal{M}_{\mathcal{R}(k)}$ à la requête peuvent être reçus par le centre de communication 210. La valeur de poids $\kappa_{(k)}$ peut alors être déterminée à partir du message réponse $\mathcal{M}_{\mathcal{R}(k)}$, notamment de l'ensemble ou une partie des informations sur les ressources $E_{\mathcal{K}}$ de chaque dispositif 100-k.

A l'étape 770-D, une liste de poids est déterminée à partir de l'ordonnancement hiérarchique des $\mathcal{K}$ identifiants $i_{(k)}$ (ou une partie des $\mathcal{K}$ identifiants $i_{(k)}$) en fonction des valeurs de poids $\kappa_{(k)}$, d'une valeur de poids maximale $K_{max}$ à une

valeur de poids minimale $K_{min}$.

A l'étape 780-D, une liste de dispositifs prioritaires est déterminée à partir de l'ordonnancement hiérarchique des $\mathcal{K}$ identifiants $i_{(k)}$ (ou une partie des $\mathcal{K}$ identifiants $i_{(k)}$) en fonction de la liste de poids et de la liste de connexions.

A l'étape 790-D, le dispositif de supervision 400 est déterminé à partir de la liste de dispositifs prioritaires.

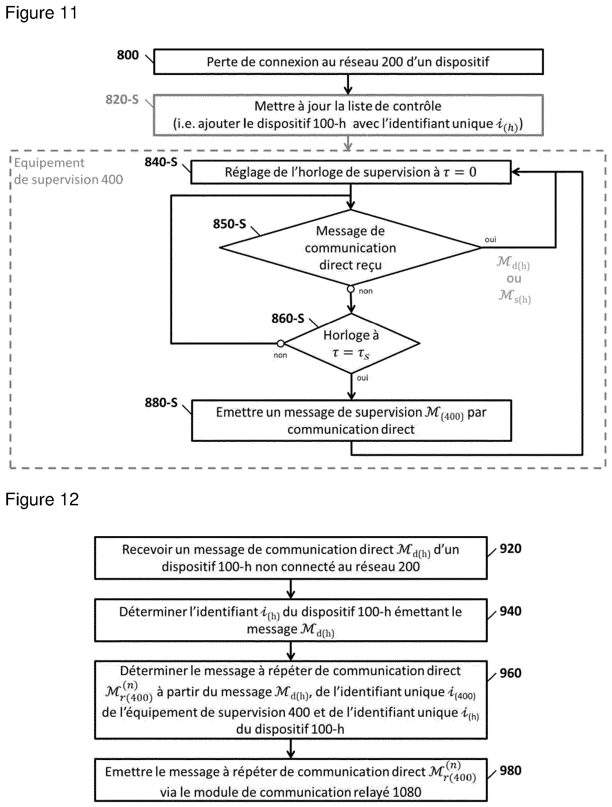

La figure 11 est un organigramme décrivant des sous-étapes du procédé de gestion de communication sans fil critique, mis en œuvre par un équipement de supervision 400, pour la supervision des états de connectivité directe entre les différents dispositifs de communication 100-n et 100-(n+1) du système 10, selon des modes de réalisation de l'invention.

A l'étape 800, un dispositif de communication 100-n est déconnecté du réseau 200.

A l'étape 820-S, la liste de contrôle comprenant au moins un identifiant parmi les identifiants $i_{(h)}$ et $i_{(z)}$ des sous-ensembles $E_{\mathcal{H}}$ et $E_{\mathcal{Z}}$ des dispositifs « hors ligne » 100-h et 100-z est mise à jour. Notamment, un dispositif 100-h peut être déconnecté du réseau 200 à l'étape 800, l'identifiant $i_{(h)}$ étant alors ajouté à la liste de contrôle.

A l'étape 840-S, une horloge de supervision de l'équipement de supervision 400 (par exemple liée à la supervision du dispositif 100-n déconnecté du réseau 200 à l'étape 800) est mise à 0 ($\tau = 0$) et activée. Dans des modes de réalisation, la valeur de l'horloge de supervision peut également être fixée en fonction d'une ou plusieurs valeurs associées à un ou plusieurs horodatages $t_{(n+1)}$ relatifs aux différents états de connectivité direct $\varepsilon_{d(n \leftrightarrow n+1)}$ et/ou des horodatages $t_e$ relatifs aux matrices de connectivité élémentaires $\tau_{(n)}$ reçues.

A l'étape 860-S, si la valeur de l'horloge de supervision atteint la valeur temporelle associée à la fréquence de supervision $\tau = \tau_s$ alors le message de supervision $\mathcal{M}_{(400)}$ est déterminé à partir des identifiants de la liste de contrôle, puis émis par l'intermédiaire du mode de communication directe à l'étape 880-S.

A l'étape 850-S, si un message de communication direct $\mathcal{M}_{d(h)}$ quelconque émis par le dispositif 100-h déconnecté du réseau 200 à l'étape 800, est reçu par l'équipement de supervision 400, par l'intermédiaire du mode de communication directe, avant que l'horloge de supervision liée à la supervision de ce dispositif 100-h, n'atteigne une valeur temporelle associée à la fréquence de supervision $\tau < \tau_s$ alors la valeur de cette horloge de supervision, est remise à 0 et réactivée.

La figure 12 est un organigramme selon des modes de réalisation de l'invention décrivant des sous-étapes du procédé de gestion de communication sans fil critique pour la réception et l'émission d'un message, mis en œuvre par un dispositif de communication 100-n (notamment un équipement de supervision 400).

A l'étape 920, un message de communication directe $\mathcal{M}_{d(h)}$ émis par un dispositif de communication 100-h (« hors ligne » et agencé à portée radio direct de l'équipement de supervision 400) est reçu par l'équipement de supervision 400 (étant un dispositif de communication 100-n, le message de communication directe $\mathcal{M}_{d(h)}$ est réceptionné via le mode de communication directe par le module de communication directe 1060).

A l'étape 940, l'identifiant $i_{(h)}$ du dispositif de communication 100-h est déterminé à partir de données d'identification du message reçu $\mathcal{M}_{d(h)}$ par l'équipement de supervision 400.

A l'étape 960, le message à répéter de communication relayée

$$\mathcal{M}_{r(400)}^{(h)}$$

est déterminé, par l'équipement de supervision 400, à partir du message reçu de communication directe $\mathcal{M}_{d(h)}$ transmis par le dispositif 100-h, de l'identifiant unique $i_{(n)}$ (ou $i_{(400)}$) du dispositif 100-n (i.e. équipement de supervision 400) et de l'identifiant unique $i_{(h)}$ associé au dispositif 100-h.

A l'étape 980, le message à répéter de communication relayée

$$\mathcal{M}_{r(400)}^{(h)}$$

est transmis via le mode de communication relayée par le module de communication relayée 1080 de l'équipement de supervision 400.

L'homme du métier comprendra que les dispositifs de communication, selon les modes de réalisation de l'invention, peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes. Le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier à condition que ces variantes soient couvertes par les revendications ci-après. En particulier, l'homme du métier comprendra que l'invention n'est pas limitée aux différents modules de gestion, de communication relayée et/ou de communication directe, décrits à titre d'exemples non limitatifs.

## Revendications

1. Système de communication sans fil critique (10) comprenant un ensemble de $\mathcal{N}$ dispositifs de communication (100), un centre de communication (210) et une infrastructure réseau configurée pour mettre en œuvre un réseau d'interconnexion (200), chaque dispositif de communication dudit ensemble (100) comprenant un module de communication directe (1060) fonctionnant selon un protocole de communication directe et un module de communication relayée (1080) fonctionnant selon un protocole de communication relayée, c'est-à-dire avec connexion à une infrastructure réseau via ledit réseau d'interconnexion (200), ledit module de communication relayée (1080) étant associé à un état de connectivité relayée correspondant à un état de connexion dudit dispositif de communication de l'ensemble (100) avec le réseau d'interconnexion (200), chaque dispositif de communication dudit ensemble (100) étant en outre associé à ( $\mathcal{N}$ - 1) états de connectivité directe correspondant à un état de liaison de communication sans fil directe dudit dispositif de communication dudit ensemble (100)avec chacun des autres dispositifs de communication dudit ensemble de dispositifs de communication (100), l'état de connectivité directe ayant une valeur binaire parmi une première valeur et une deuxième valeur,

   le système de communication sans fil (10) comprenant au moins un dispositif de communication (100-h) non connecté audit réseau d'interconnexion (200) et au moins un dispositif de communication (100-n) connecté audit réseau d'interconnexion (200), l'état de connectivité directe $\varepsilon_{d(n\leftrightarrow h)}$, correspondant à l'état de liaison de communication sans fil directe dudit dispositif de communication (100-n) connecté avec ledit dispositif de communication (100-h) non connecté, étant égal à la première valeur si un dispositif de communication (100-n) connecté et un dispositif de communication (100-h) non connecté sont à portée radio directe,
   le centre de communication (210) étant configuré pour recevoir lesdits états de connectivité relayée et lesdits états de connectivité directe de l'ensemble des $\mathcal{N}$ dispositifs de communication, chaque dispositif de communication (100-n) connecté étant associé à un nombre d'états de connectivité directe $\chi_{d(n)}$ déterminé à partir desdits états de connectivité directe $\varepsilon_{d(n\leftrightarrow h)}$, le centre de communication (210) étant en outre configuré pour sélectionner un équipement de supervision (400) parmi ledit ensemble de $\mathcal{N}$ dispositifs de communication (100) à partir desdits états de connectivité relayée $\varepsilon_{r(n)}$, et des nombres d'états de connectivité directe $\chi_{d(n)}$ déterminés.

2. Système de communication sans fil critique (10), selon la revendication 1, dans lequel l'équipement de supervision (400) est un dispositif de communication (100-n) connecté audit réseau d'interconnexion (200).

3. Système de communication sans fil critique (10), selon l'une des revendications 1 ou 2, dans lequel le centre de communication (210) est configuré pour déterminer un score associé à chaque dispositif de communication de l'ensemble (100) parmi une partie au moins des dispositifs dudit ensemble de dispositifs de communication (100), le score étant déterminé à partir de critères de détermination et étant compris entre un score maximal $PRIO_{max}$ et un score minimal $PRIO_{min}$, et dans lequel l'équipement de supervision (400) est un dispositif de communication de l'ensemble (100) associé au score maximal $PRIO_{max}$.

4. Système de communication sans fil critique (10), selon l'une des revendications 1 à 3, dans lequel l'équipement de supervision (400) est sélectionné selon une fréquence de détermination $f_d$ prédéfinie, et/ou en réponse à la mise à jour desdits états de connectivité relayée et/ou desdits états de connectivité directe.

5. Système de communication sans fil critique (10), selon l'une des revendications 1 à 4, dans lequel le nombre d'états de connectivité directe $\chi_{d(n)}$ déterminé à partir desdits états de connectivité directe d'un dispositif de communication (100-n) connecté par rapport à un dispositif de communication (100-h) non connecté est compris entre un nombre d'états de connectivité directe maximal $\chi_{max}$ et un nombre d'états de connectivité directe minimal $\chi_{min}$, et dans lequel l'équipement de supervision (400) est un dispositif de communication (100-n) connecté étant associé au nombre d'états de connectivité maximal $\chi_{d(n)} = \chi_{max}$.

6. Système de communication sans fil critique (10), selon l'une des revendications 1 à 5, dans lequel chaque dispositif de communication de l'ensemble (100) comprend un ensemble des ressources $\mathcal{R}_{(n)}$ et est associé à une valeur de poids $\kappa_{(n)}$ déterminé à partir dudit ensemble des ressources $\mathcal{R}_{(n)}$, la valeur de poids $\kappa_{(n)}$ étant comprise entre une valeur de poids maximale $K_{max}$ et une valeur de poids minimale $K_{min}$, et dans lequel l'équipement de supervision (400) est un dispositif de communication (100-n) connecté associé à une valeur de poids maximale $\kappa_{(n)} = K_{max}$.

7. Système de communication sans fil critique (10), selon la revendication 6, dans lequel ledit ensemble de ressources $\mathcal{R}_{(n)}$ comprend un nombre $J$ de caractéristiques physiques et/ou virtuelles

$$\mathcal{R}_{(n)}^{j},$$

, chaque caractéristique physique et/ou virtuelle

$$\mathcal{R}_{(n)}^{j}$$

étant définie en fonction d'un facteur de disponibilité

$$x_{(n)}^{j}$$

de ladite caractéristique associée audit dispositif de communication de l'ensemble (100).

8. Système de communication sans fil critique (10), selon l'une des revendications 6 ou 7, dans lequel ledit ensemble de ressources $R_{(n)}$ comprend un nombre $J$ de caractéristiques physiques et/ou virtuelles

$$\mathcal{R}_{(n)}^{j},$$

, chaque caractéristique physique et/ou virtuelle

$$\mathcal{R}_{(n)}^{j}$$

étant définie en fonction d'une valeur arbitraire d'utilité et/ou d'importance

$$p_{(n)}^{j}$$

de ladite caractéristique associée audit système (10) et/ou de ladite caractéristique associée audit dispositif de communication de l'ensemble (100).

9. Système de communication sans fil critique (10), selon l'une des revendications 7 ou 8, dans lequel le facteur de disponibilité

$$x^j_{(n)}$$

et/ou la valeur arbitraire d'utilité et/ou d'importance

$$p^j_{(n)}$$

sont déterminés à chaque mise à jour desdits états de connectivité relayée $\varepsilon_{r(n)}$ et/ou desdits états de connectivité directe $\varepsilon_{d(n\leftrightarrow n+1)}$.

10. Système de communication sans fil critique (10), selon l'une des revendications 6 à 9, dans lequel au moins une partie des dispositifs de communication de l'ensemble (100) est configurée pour déterminer un message de ressources $\mathcal{M}_{\mathcal{R}(k)}$ comprenant ledit poids $\kappa_{(n)}$, et dans lequel au moins une partie des dispositifs de communication (100-n) connectés est configurée pour envoyer ledit message de ressources $\mathcal{M}_{\mathcal{R}(k)}$ via le module de communication relayée (1080).

11. Système de communication sans fil critique (10), selon l'une des revendications 3 à 10, dans lequel chaque dispositif de communication de l'ensemble (100) comprend une unité de géolocalisation (1048) configurée pour fournir des données de géolocalisation dudit dispositif de communication de l'ensemble (100), au moins certains des dispositifs de communication de l'ensemble (100) étant configurés pour déterminer un message à transmettre $\text{parti}$ comprenant au moins une partie desdites données de géolocalisation dudit dispositif de communication de l'ensemble (100), et dans lequel au moins certains des dispositifs de communication (100-n) connectés sont configurés pour envoyer ledit message à transmettre $\text{parti}$ via le module de communication relayée (1080) et/ou via le module de communication directe (1060), et dans lequel le centre de communication (210) est configuré pour recevoir lesdits messages $\text{parti}$ transmis par lesdits dispositifs de communication (100-n) connectés, un desdits critères de détermination étant déterminé à partir desdites données de géolocalisation.

12. Procédé de gestion de communication sans fil critique (10) mis en œuvre dans un système de communication sans fil (10) comprenant un ensemble de $\mathcal{N}$ dispositifs de communication (100), le procédé comprenant une étape de communication directe (1060-S) mise en œuvre dans chaque dispositif de communication dudit ensemble (100) selon un protocole de communication directe et une étape de communication relayée (1080-S) mise en œuvre dans chaque dispositif de communication dudit ensemble (100) fonctionnant selon un protocole de communication relayée, c'est-à-dire avec connexion à une infrastructure réseau via un réseau d'interconnexion (200) mise en œuvre dans le système de communication, ladite étape de communication relayée (1080-S) étant associée à un état de connectivité relayée correspondant à un état de connexion dudit dispositif de communication de l'ensemble (100) avec le réseau d'interconnexion (200), ladite étape de communication directe (1060-S) étant associée à ( $\mathcal{N}$ - 1) états de connectivité directe correspondant à un état de liaison de communication sans fil directe dudit dispositif de communication dudit ensemble (100) avec chacun des autres dispositifs de communication dudit ensemble de dispositifs de communication sans fil critiques, l'état de connectivité directe ayant une valeur binaire parmi une première valeur et une deuxième valeur,

le système de communication sans fil (10) comprenant en outre au moins un dispositif de communication (100-h) non connecté audit réseau d'interconnexion (200) et au moins un dispositif de communication (100-n) connecté audit réseau d'interconnexion (200), l'état de connectivité directe $\varepsilon_{d(n\leftrightarrow h)}$, correspondant à l'état de liaison de communication sans fil directe dudit dispositif de communication (100-n) connecté avec ledit dispositif de communication (100-h) non connecté, étant égal à la première valeur si un dispositif de communication (100-n) connecté et un dispositif de communication (100-h) non connecté sont à portée radio directe,
le procédé comprenant une étape consistant à recevoir lesdits états de connectivité relayée et lesdits états de connectivité directe de l'ensemble des $\mathcal{N}$ dispositifs de communication sans fil critiques, chaque dispositif de communication (100-n) connecté étant associé à un nombre d'états de connectivité directe $\chi_{d(n)}$ déterminé à partir desdits états de connectivité directe $\varepsilon_{d(n\leftrightarrow h)}$, le procédé comprenant en outre une étape de sélection d'un équipement de supervision (400) parmi ledit ensemble de $\mathcal{N}$ dispositifs de communication (100) à partir desdits états de connectivité relayée $\varepsilon_{r(n)}$, et desdits nombres d'états de connectivité directe $\chi_{d(n)}$ déterminés.

13. Procédé de gestion de communication sans fil critique, selon la revendication 12, dans lequel chaque dispositif de communication dudit ensemble (100) comprend en outre un ensemble des ressources $\mathcal{R}(n)$, et dans lequel le procédé comprend les étapes consistant à :

- déterminer (700-D) une liste initiale comprenant $\mathcal{K}$ identifiants $i_{(k)}$ associés à $\mathcal{K}$ dispositifs de communication connectés au réseau (200) parmi l'ensemble des N identifiants $i_{(n)}$, la liste initiale étant déterminée à partir desdits états de connectivité relayée $\varepsilon_{r(n)}$ et desdits états de connectivité directe $\varepsilon_{d(n\leftrightarrow n+1)}$,

- déterminer (710-D) pour chaque identifiant $i_{(k)}$ associé à un dispositif de communication connecté (100-k) un nombre d'états de connectivité directe $\chi_{d(k)}$, le nombre d'état de connectivité directe $\chi_{d(k)}$ étant déterminé à partir desdits états de connectivité directe $\varepsilon_{d(k\leftrightarrow h)}$ correspondant aux états de liaison de communication sans fil direct dudit dispositif de communication (100-h) non connectés au réseau (200) d'états de connectivité relayée $\varepsilon_{r(h)}$,

- déterminer (720-D) une liste de connexions comprenant des nombres d'état de connectivité directe $\chi_{d(k)}$ associés à $\mathcal{K}$ identifiants $i_{(k)}$ ordonnés selon un ordre choisi, entre un nombre d'état de connectivité directe maximal $X_{max}$ et un nombre d'état de connectivité directe minimal $X_{min}$ ,

- déterminer (740-D) pour chaque identifiant $i_{(k)}$ associé à un dispositif de communication connecté (100-k), parmi au moins une partie des identifiants $i_{(k)}$, une valeur de poids $\kappa_{(k)}$, la valeur de poids $\kappa_{(k)}$ étant déterminée à partir dudit ensemble des ressources $\mathcal{R}(k)$,

- déterminer (770-D) une liste de poids comprenant des valeurs de poids $\kappa_{(k)}$ associées aux $\mathcal{K}$ identifiants $i_{(k)}$ de ladite partie des identifiants $i_{(k)}$, la liste de poids étant ordonnée selon ledit ordre choisi, entre une valeur de poids maximale $K_{max}$ et une valeur de poids minimale $K_{min}$,

- déterminer (780-D) une liste de dispositifs prioritaires comprenant des dispositifs prioritaires associés aux $\mathcal{K}$ identifiants $i_{(k)}$ de ladite partie des identifiants $i_{(k)}$ en fonction de la liste de poids et de la liste de connexions,

- déterminer (780-D) un dispositif de supervision (400) à partir de la liste de dispositifs prioritaires.

**Patentansprüche**

1. System (10) zur kritischen drahtlosen Kommunikation, umfassend einen Satz von $\mathcal{N}$ Kommunikationsvorrichtungen (100), ein Kommunikationszentrum (210) und eine Netzinfrastruktur, die konfiguriert ist, um ein Verbundnetz (200) zu implementieren, wobei jede Kommunikationsvorrichtung des Satzes (100) Folgendes umfasst:

ein Direktkommunikationsmodul (1060), das gemäß einem Direktkommunikationsprotokoll arbeitet, und ein Übertragungskommunikationsmodul (1080), das gemäß einem Übertragungskommunikationsprotokoll arbeitet, das heißt mit einer Verbindung zu einer Netzinfrastruktur über das Verbundnetz (200), wobei das Übertragungskommunikationsmodul (1080) einem Übertragungskonnektivitätszustand zugeordnet ist, der einem Verbindungszustand der Kommunikationsvorrichtung des Satzes (100) mit dem Verbundnetz (200) entspricht, wobei jede Kommunikationsvorrichtung des Satzes (100) ferner ($\mathcal{N}$ - 1) Direktkonnektivitätszuständen entsprechend einem drahtlosen Direktkommunikationsverknüpfungszustand der Kommunikationsvorrichtung des Satzes (100) mit jeder der anderen Kommunikationsvorrichtungen des Satzes (100) von Kommunikationsvorrichtungen zugeordnet ist, wobei der Direktkonnektivitätszustand einen binären Wert aus einem ersten Wert und einem zweiten Wert aufweist,

wobei das drahtlose Kommunikationssystem (10) mindestens eine Kommunikationsvorrichtung (100-h), die

**EP 4 336 961 B1**

nicht mit dem Verbundnetz (200) verbunden ist, und mindestens eine Kommunikationsvorrichtung (100-n) umfasst, die mit dem Verbundnetz (200) verbunden ist, wobei der Direktkonnektivitätszustand $\varepsilon_{d(n\leftrightarrow h)}$, der dem drahtlosen Direktkommunikationsverknüpfungszustand der Kommunikationsvorrichtung (100-n), die mit der nicht verbundenen Kommunikationsvorrichtung (100-h) verbunden ist, entspricht, gleich dem ersten Wert ist, wenn sich eine verbundene Kommunikationsvorrichtung (100-n) und eine nicht verbundene Kommunikationsvorrichtung (100-h) in direkter Funkreichweite befinden,

wobei das Kommunikationszentrum (210) konfiguriert ist, um die Übertragungskonnektivitätszustände und die Direktkonnektivitätszustände des Satzes der $\mathcal{N}$ Kommunikationsvorrichtungen zu empfangen, wobei jede verbundene Kommunikationsvorrichtung (100-n) einer Anzahl von Direktkonnektivitätszuständen $\chi_{d(n)}$ zugeordnet ist, die anhand der Direktkonnektivitätszustände $\varepsilon_{d(n\leftrightarrow h)}$ bestimmt wird, wobei das Kommunikationszentrum (210) ferner konfiguriert ist, um eine Überwachungsausrüstung (400) aus dem Satz von $\mathcal{N}$ Kommu-nikationsvorrichtungen (100) anhand der Übertragungskonnektivitätszustände $\varepsilon_{r(n)}$ und der bestimmten Anzah-len von Direktkonnektivitätszuständen $\chi_{d(n)}$ auszuwählen.

2. System (10) zur kritischen drahtlosen Kommunikation nach Anspruch 1, wobei die Überwachungsausrüstung (400) eine Kommunikationsvorrichtung (100-n) ist, die mit dem Verbundnetz (200) verbunden ist.

3. System (10) zur kritischen drahtlosen Kommunikation nach einem der Ansprüche 1 oder 2, wobei das Kommunikationszentrum (210) konfiguriert ist, um aus mindestens einem Teil der Vorrichtungen des Satzes (100) von Kommunikationsvorrichtungen einen Score zu bestimmen, der jeder Kommunikationsvorrichtung des Satzes (100) zugeordnet ist, wobei der Score anhand von Bestimmungskriterien bestimmt wird und zwischen einem maximalen Score $PRIO_{max}$ und einem minimalen Score $PRIO_{min}$ liegt, und wobei die Überwachungsausrüstung (400) eine Kommunikationsvorrichtung des Satzes (100) ist, die dem maximalen Score $PRIO_{max}$ zugeordnet ist.

4. System (10) zur kritischen drahtlosen Kommunikation nach einem der Ansprüche 1 bis 3, wobei die Überwachungsausrüstung (400) gemäß einer vordefinierten Bestimmungsfrequenz $f_d$ und/oder als Reaktion auf die Aktualisierung der Übertragungskonnektivitätszustände und/oder der Direktkonnektivitätszustände ausgewählt ist.

5. System (10) zur kritischen drahtlosen Kommunikation nach einem der Ansprüche 1 bis 4, wobei die bestimmte Anzahl von Direktkonnektivitätszuständen $\chi_{d(n)}$ anhand der Direktkonnektivitätszustände einer verbundenen Kommunikationsvorrichtung (100-n) in Bezug auf eine nicht verbundene Kommunikationsvorrichtung (100-h) zwischen einer maximalen Anzahl von Direktkonnektivitätszuständen $X_{max}$ und einer minimalen Anzahl von Direktkonnektivitäts-zuständen $X_{min}$ liegt, und wobei die Überwachungsausrüstung (400) eine verbundene Kommunikationsvorrichtung (100-n) ist, die der maximalen Anzahl von Konnektivitätszuständen $\chi_{d(n)} = X_{max}$ zugeordnet ist.

6. System (10) zur kritischen drahtlosen Kommunikation nach einem der Ansprüche 1 bis 5, wobei jede Kommunikationsvorrichtung des Satzes (100) einen Satz der Ressourcen $\mathcal{R}_{(n)}$ umfasst und einem Gewichtswert $\kappa_{(n)}$ zuge-ordnet ist, der anhand des Satzes der Ressourcen $\mathcal{R}_{(n)}$ bestimmt ist, wobei der Gewichtswert $\kappa_{(n)}$ zwischen einem maximalen Gewichtswert $K_{max}$ und einem minimalen Gewichtswert $K_{min}$ liegt, und wobei die Überwachungsausrüstung (400) eine verbundene Kommunikationsvorrichtung (100-n) ist, die einem maximalen Gewichtswert $\kappa_{(n)} = K_{max}$ zugeordnet ist.

7. System (10) zur kritischen drahtlosen Kommunikation nach Anspruch 6, wobei der Ressourcensatz $\mathcal{R}_{(n)}$ eine Anzahl J von physischen und/oder virtuellen Kennzeichen

$$\mathcal{R}_{(n)}^{j}$$

umfasst, wobei jedes physische und/oder virtuelle Kennzeichen

$$\mathcal{R}_{(n)}^{j}$$

in Abhängigkeit von einem Verfügbarkeitsfaktor

$$x^j_{(n)}$$

des der Kommunikationsvorrichtung des Satzes (100) zugeordneten Kennzeichens definiert ist.

8. System (10) zur kritischen drahtlosen Kommunikation nach einem der Ansprüche 6 oder 7, wobei der Ressourcensatz $\mathcal{R}_{(n)}$ eine Anzahl J von physischen und/oder virtuellen Kennzeichen

$$\mathcal{R}^j_{(n)}$$

umfasst, wobei jedes physische und/oder virtuelle Kennzeichen

$$\mathcal{R}^j_{(n)}$$

in Abhängigkeit von einem zufälligen Nützlichkeits- und/oder Wichtigkeitswert

$$p^j_{(n)}$$

des dem System (10) zugeordneten Kennzeichens und/oder des der Kommunikationsvorrichtung des Satzes (100) zugeordneten Kennzeichens definiert ist.

9. System (10) zur kritischen drahtlosen Kommunikation nach einem der Ansprüche 7 oder 8, wobei der Verfügbarkeitsfaktor

$$x^j_{(n)}$$

und/oder der zufällige Nützlichkeits- und/oder Wichtigkeitswert

$$p^j_{(n)}$$

bei jeder Aktualisierung der Übertragungskonnektivitätszustände $\varepsilon_{r(n)}$ und/oder der Direktkonnektivitätszustände $\varepsilon_d{}_{(n\leftrightarrow n+1)}$ bestimmt werden.

10. System (10) zur kritischen drahtlosen Kommunikation nach einem der Ansprüche 6 bis 9, wobei mindestens ein Teil der Kommunikationsvorrichtungen des Satzes (100) konfiguriert ist, um eine Ressourcennachricht $\mathcal{M}_{\mathcal{R}(k)}$ zu bestimmen, die das Gewicht $\kappa_{(n)}$ umfasst, und wobei mindestens ein Teil der verbundenen Kommunikationsvorrichtungen (100-n) konfiguriert ist, um die Ressourcennachricht $\mathcal{M}_{\mathcal{R}(k)}$ über das Übertragungskommunikationsmodul (1080) zu senden.

11. System (10) zur kritischen drahtlosen Kommunikation nach einem der Ansprüche 3 bis 10, wobei jede Kommunikationsvorrichtung des Satzes (100) eine Ortungseinheit (1048) umfasst, die konfiguriert ist, um Ortungsdaten der Kommunikationsvorrichtung des Satzes (100) bereitzustellen, wobei mindestens einige der Kommunikationsvorrichtungen de Satzes (100) konfiguriert sind, um eine zu übermittelnde Nachricht $\mathcal{M}_{(n)}$ zu bestimmen, die mindestens einen Teil der Ortungsdaten der Kommunikationsvorrichtung des Satzes (100) umfasst, und wobei mindestens einige der verbundenen Kommunikationsvorrichtungen (100-n) konfiguriert sind, um die zu übermit-

telnde Nachricht $\mathcal{M}_{(n)}$ über das Übertragungskommunikationsmodul (1080) und/oder über das Direktkommunikationsmodul (1060) zu senden, und wobei das Kommunikationszentrum (210) konfiguriert ist, um die von den verbundenen Kommunikationsvorrichtungen (100-n) übermittelten Nachrichten $\mathcal{M}_{(n)}$ zu empfangen, wobei eines der Bestimmungskriterien anhand der Ortungsdaten bestimmt wird.

12. Verfahren zum Verwalten von kritischer drahtloser Kommunikation (10), das in einem drahtlosen Kommunikationssystem (10) implementiert wird, umfassend einen Satz von $\mathcal{N}$ Kommunikationsvorrichtungen (100), wobei das Verfahren einen Schritt zur Direktkommunikation (1060-S), der in jeder Kommunikationsvorrichtung des Satzes (100) gemäß einem Direktkommunikationsprotokoll implementiert wird, und einen Schritt zur Übertragungskommunikation (1080-S) umfasst, der in jeder Kommunikationsvorrichtung des Satzes (100) implementiert wird, die gemäß einem Übertragungskommunikationsprotokoll arbeitet, das heißt mit einer Verbindung zu einer Netzinfrastruktur über ein Verbundnetz (200), das in dem Kommunikationssystem implementiert wird, wobei der Schritt zur Übertragungskommunikation (1080-S) einem Übertragungskonnektivitätszustand zugeordnet ist, der einem Verbindungszustand der Kommunikationsvorrichtung des Satzes (100) mit dem Verbundnetz (200) entspricht, wobei der Schritt zur Direktkommunikation (1060-S) ( $\mathcal{N}$ - 1) Direktkonnektivitätszuständen zugeordnet ist, die einem drahtlosen Direktkommunikationsverknüpfungszustand der Kommunikationsvorrichtung des Satzes (100) mit jeder der anderen Kommunikationsvorrichtungen des Satzes von kritischen drahtlosen Kommunikationsvorrichtungen entsprechen, wobei der Direktkonnektivitätszustand einen binären Wert aus einem ersten Wert und einem zweiten Wert aufweist,

wobei das drahtlose Kommunikationssystem (10) ferner mindestens eine Kommunikationsvorrichtung (100-h), die nicht mit dem Verbundnetz (200) verbunden ist, und mindestens eine Kommunikationsvorrichtung (100-n), die mit dem Verbundnetz (200) verbunden ist, umfasst, wobei der Direktkonnektivitätszustand $\varepsilon_{d(n \leftrightarrow h)}$, der dem drahtlosen Direktkommunikationsverknüpfungszustand der Kommunikationsvorrichtung (100-n), die mit der nicht verbundenen Kommunikationsvorrichtung (100-h) verbunden ist, entspricht, gleich dem ersten Wert ist, wenn sich eine verbundene Kommunikationsvorrichtung (100-n) und eine nicht verbundene Kommunikationsvorrichtung (100-h) in direkter Funkreichweite befinden,
wobei das Verfahren einen Schritt umfasst, der darin besteht, die Übertragungskonnektivitätszustände und die Direktkonnektivitätszustände des Satzes der $\mathcal{N}$ kritischen drahtlosen Kommunikationsvorrichtungen zu empfangen, wobei jede verbundene Kommunikationsvorrichtung (100-n) einer Anzahl von Direktkonnektivitätszuständen $\chi_{d(n)}$ zugeordnet ist, die anhand der Direktkonnektivitätszustände $\varepsilon_{d(n \leftrightarrow h)}$ bestimmt wird, wobei das Verfahren ferner einen Schritt zum Auswählen einer Überwachungsausrüstung (400) aus dem Satz von $\mathcal{N}$ Kommunikationsvorrichtungen (100) anhand der Übertragungskonnektivitätszustände $\varepsilon_{r(n)}$ und der bestimmten Anzahlen von Direktkonnektivitätszuständen umfasst.

13. Verfahren zum Verwalten von kritischer drahtloser Kommunikation nach Anspruch 12, wobei jede Kommunikationsvorrichtung des Satzes (100) ferner einen Satz der Ressourcen $\mathcal{R}_{(n)}$ umfasst, und wobei das Verfahren die Schritte umfasst, die aus Folgendem bestehen:

- Bestimmen (700-D) einer Anfangsliste, die $\mathcal{K}$ Kennungen $i_{(k)}$ umfasst, die $\mathcal{K}$ mit dem Netz (200) verbundenen Kommunikationsvorrichtungen aus dem Satz der $\mathcal{N}$ Kennungen $i_{(n)}$ zugeordnet sind, wobei die Anfangsliste anhand der Übertragungskonnektivitätszustände $\varepsilon_{r(n)}$ und der Direktkonnektivitätszustände $\varepsilon_{d(n \leftrightarrow n+1)}$ bestimmt wird,

- Bestimmen (710-D), für jede Kennung $i_{(k)}$, die einer verbundenen Kommunikationsvorrichtung (100-k) zugeordnet ist, einer Anzahl von Direktkonnektivitätszuständen $\chi_{d(k)}$, wobei die Anzahl von Direktkonnektivitätszustand $\chi_{d(k)}$ anhand der Direktkonnektivitätszustände $\varepsilon_{d(k \leftrightarrow h)}$ bestimmt wird, die den drahtlosen Direktkommunikationsverknüpfungszuständen der Kommunikationsvorrichtung (100-h) entsprechen, die nicht mit dem Netz (200) von Übertragungskonnektivitätszuständen $\varepsilon_{r(h)}$ verbunden sind,
- Bestimmen (720-D) einer Verbindungsliste, umfassend Anzahlen eines Direktkonnektivitätszustands $\chi_{d(k)}$, die $\mathcal{K}$ Kennungen $i_{(k)}$ zugeordnet sind, die gemäß einer gewählten Reihenfolge zwischen einer maximalen

Anzahl eines Direktkonnektivitätszustands $X_{max}$ und einer minimalen Anzahl eines Direktkonnektivitätszustands $X_{min}$ angeordnet sind,

- Bestimmen (740-D), für jede Kennung $i_{(k)}$, die einer verbundenen Kommunikationsvorrichtung (100-k) zugeordnet ist, aus mindestens einem Teil der Kennungen $i_{(k)}$, eines Gewichtswertes $\kappa_{(k)}$, wobei der Gewichtswert $\kappa_{(k)}$ anhand des Satzes der Ressourcen $\mathcal{R}_{(k)}$ bestimmt wird,

- Bestimmen (770-D) einer Gewichtsliste, umfassend Gewichtswerte $\kappa_{(k)}$, die den $\mathcal{K}$ Kennungen $i_{(k)}$ des Teils der Kennungen $i_{(k)}$ zugeordnet sind, wobei die Gewichtsliste gemäß der gewählten Reihenfolge zwischen einem maximalen Gewichtswert $K_{max}$ und einem minimalen Gewichtswert $K_{min}$ geordnet ist,
- Bestimmen (780-D) einer Liste von vorrangigen Vorrichtungen, umfassend vorrangige Vorrichtungen, die den $\mathcal{K}$ Kennungen $i_{(k)}$ des Teils der Kennungen $i_{(k)}$ in Abhängigkeit von der Gewichtsliste und der Verbindungsliste zugeordnet sind,
- Bestimmen (780-D) einer Überwachungsvorrichtung (400) anhand der Liste von vorrangigen Vorrichtungen.

## Claims

1. A critical wireless communication system (10) comprising a set of $\mathcal{N}$ communication devices (100), a communication centre (210) and a network infrastructure which is configured to implement an interconnection network (200), each communication device of the set (100) comprising

   a direct communication module (1060) which operates in accordance with a direct communication protocol and a relayed communication module (1080) which operates in accordance with a relayed communication protocol, that is to say with connection to a network infrastructure via the interconnection network (200), the relayed communication module (1080) being associated with a state of relayed connectivity which corresponds to a connection state of the communication device of the set (100) with the interconnection network (200), each communication device of the set (100) being further associated with ($\mathcal{N}$ - 1) states of direct connectivity which correspond to a direct wireless communication link state of the communication device of the set (100) with each of the other communication devices of the set of communication devices (100), the state of direct connectivity having a binary value from a first value and a second value,
   the wireless communication system (10) comprising at least one communication device (100-h) which is not connected to the interconnection network (200) and at least one communication device (100-n) which is connected to the interconnection network (200), the state of direct connectivity $\varepsilon_{d(n\leftrightarrow h)}$ corresponding to the direct wireless communication link state of the communication device (100-n) which is connected to the communication device (100-h) which is not connected, being equal to the first value if a connected communication device (100-n) and a non-connected communication device (100-h) are within direct radio range,
   the communication centre (210) being configured to receive the states of relayed connectivity and the states of direct connectivity of the set of the $\mathcal{N}$ communication devices, each connected communication device (100-n) being associated with a number of states of direct connectivity $\chi_{d(n)}$ determined from the states of direct connectivity $\varepsilon_{d(n\leftrightarrow h)}$, the communication centre (210) being further configured to select an item of supervision equipment (400) from the set of $\mathcal{N}$ communication devices (100) from the states of relayed connectivity $\varepsilon_{r(n)}$ and the determined numbers of states of direct connectivity $\chi_{d(n)}$.

2. The critical wireless communication system (10) according to claim 1, wherein the supervision equipment item (400) is a communication device (100-n) which is connected to the interconnection network (200).

3. The critical wireless communication system (10) according to any one of claim 1 or claim 2, wherein the communication centre (210) is configured to determine a score associated with each communication device of the set (100) from at least a portion of the devices of the set of communication devices (100), the score being determined from determination criteria and being between a maximum score $PRIO_{max}$ and a minimum score $PRIO_{min}$, and wherein the supervision equipment item (400) is a communication device of the set (100) associated with the maximum score

$PRIO_{max}$.

4. The critical wireless communication system (10) according to any one of claims 1 to 3, wherein the supervision equipment item (400) is selected in accordance with a predefined determination frequency $f_d$ and/or in response to the updating of the states of relayed connectivity and/or the states of direct connectivity.

5. The critical wireless communication system (10) according to any one of claims 1 to 4, wherein the number of direct connectivity states $\chi_{d(n)}$ determined from the states of direct connectivity of a communication device (100-n) connected relative to a communication device (100-h) which is not connected is between a maximum number of states of direct connectivity $X_{max}$ and a minimum number of states of direct connectivity $X_{min}$, and wherein the supervision equipment item (400) is a connected communication device (100-n) which is associated with the maximum number of states of connectivity $\chi_{d(n)} = X_{max}$.

6. The critical wireless communication system (10) according to any one of claims 1 to 5, wherein each communication device of the set (100) comprises a set of the resources $\mathcal{R}_{(n)}$ and is associated with a weight value $\kappa_{(n)}$ which is determined from the set of the resources $\mathcal{R}_{(n)}$, the weight value $\kappa_{(n)}$ being between a maximum weight value $K_{max}$ and a minimum weight value $K_{min}$, and wherein the supervision equipment item (400) is a connected communication device (100-n) which is associated with a maximum weight value $\kappa_{(n)} = K_{max}$.

7. The critical wireless communication system (10) according to claim 6, wherein the set of resources $\mathcal{R}_{(n)}$ comprises a number J of physical and/or virtual characteristics

$$\mathcal{R}^j_{(n)}$$

, each physical and/or virtual characteristic

$$\mathcal{R}^j_{(n)}$$

being defined as a function of an availability factor

$$x^j_{(n)}$$

of the characteristic associated with the communication device of the set (100).

8. The critical wireless communication system (10) according to any one of claim 6 or claim 7, wherein the set of resources $\mathcal{R}_{(n)}$ comprises a number J of physical and/or virtual characteristics

$$\mathcal{R}^j_{(n)},$$

, each physical and/or virtual characteristic

$$\mathcal{R}^j_{(n)}$$

being defined as a function of an arbitrary utility and/or importance value

$$p^j_{(n)}$$

of the characteristic associated with the system (10) and/or the characteristic associated with the communication device of the set (100).

9. The critical wireless communication system (10) according to any one of claim 7 or claim 8, wherein the availability factor

$$x^j_{(n)}$$

and/or the arbitrary utility and/or importance value $p^j_{(n)}$ are determined for each update of the states of relayed connectivity $\varepsilon_{r(n)}$ and/or the states of direct connectivity $\varepsilon_{d(n \to n+1)}$.

10. The critical wireless communication system (10) according to any one of claims 6 to 9, wherein at least a portion of the communication devices of the set (100) is configured to determine a resource message $\mathcal{M}_{\mathcal{R}(k)}$ comprising the weight $\kappa_{(n)}$, and wherein at least a portion of the connected communication devices (100-n) is configured to send the resource message $\mathcal{M}_{\mathcal{R}(k)}$ via the relayed communication module (1080).

11. The critical wireless communication system (10) according to any one of claims 3 to 10, wherein each communication device of the set (100) comprises a geolocation unit (1048) which is configured to provide geolocation data of the communication device of the set (100), at least some of the communication devices of the set (100) being configured to determine a message $\mathcal{M}_{(n)}$ to be transmitted comprising at least a portion of the geolocation data of the communication device of the set (100), and wherein at least some of the connected communication devices (100-n) are configured to send the message $\mathcal{M}_{(n)}$ to be transmitted via the relayed communication module (1080) and/or via the direct communication module (1060), and wherein the communication centre (210) is configured to receive the messages $\mathcal{M}_{(n)}$ transmitted by the connected communication devices (100-n), one of the determination criteria being determined from the geolocation data.

12. A method for handling critical wireless communication (10) implemented in a wireless communication system (10) comprising a set of $\mathcal{N}$ communication devices (100), the method comprising a step of direct communication (1060-S) implemented in each communication device of the set (100) according to a direct communication protocol and a step of relayed communication (1080-S) implemented in each communication device of the set (100) operating in accordance with a relayed communication protocol, that is to say with connection to a network infrastructure via an interconnection network (200) which is implemented in the communication system, the relayed communication step (1080-S) being associated with a state of relayed connectivity corresponding to a connection state of the communication device of the set (100) with the interconnection network (200), the direct communication step (1060-S) being associated with ($\mathcal{N}$ - 1) states of direct connectivity corresponding to a direct wireless communication link state of the communication device of the set (100) with each of the other communication devices of the set of critical wireless communication devices, the state of direct connectivity having a binary value from a first value and a second value,

the wireless communication system (10) further comprising at least one communication device (100-h) which is not connected to the interconnection network (200) and at least one communication device (100-n) which is connected to the interconnection network (200), the state of direct connectivity $\varepsilon_{d(n \leftrightarrow h)}$ corresponding to the direct wireless communication link state of the communication device (100-n) which is connected to the communication device (100-h) which is not connected, being equal to the first value if a communication device (100-n) which is connected and a communication device (100-h) which is not connected are within direct radio range, the method comprising a step which involves receiving the states of relayed connectivity and the states of direct connectivity of the set of the $\mathcal{N}$ critical wireless communication devices, each connected communication device (100-n) being associated with a number of direct connectivity states $\chi_{d(n)}$ determined from the states of direct connectivity $\varepsilon_{d(n \leftrightarrow h)}$, the method further comprising a step of selecting an item of supervision equipment (400) from the set of $\mathcal{N}$ communication devices (100) from the states of relayed connectivity $\varepsilon_{r(n)}$, and the determined numbers of states of direct connectivity $\chi_{d(n)}$.

13. The method for handling critical wireless communication according to claim 12, wherein each communication device of the set (100) further comprises a set of the resources $\mathcal{R}(n)$, and wherein the method comprises the steps involving:

- determining (700-D) an initial list comprising $\mathcal{K}$ identifiers $i_{(k)}$ which are associated with $\mathcal{K}$ communication devices which are connected to the network (200) from the set of the $\mathcal{N}$ identifiers $i_{(n)}$, the initial list being determined from the states of relayed connectivity $\varepsilon_{r(n)}$ and the direct connectivity states $\varepsilon_{d(n\leftrightarrow n+1)}$,

- determining (710-D) for each identifier $i_{(k)}$ associated with a connected communication device (100-k) a number of states of direct connectivity $\chi_{d(k)}$, the number of state of direct connectivity $\chi_{d(k)}$ being determined from the states of direct connectivity $\varepsilon_{d(k\leftrightarrow h)}$ corresponding to the direct wireless communication link states of the communication device (100-h) which are not connected to the network (200) of states of relayed connectivity $\varepsilon_{r(h)}$,
- determining (720-D) a list of connections comprising numbers of state of direct connectivity $\chi_{d(k)}$ associated with

$\mathcal{K}$ identifiers $i_{(k)}$ which are ordered in accordance with a selected order, between a maximum number of state of direct connectivity $X_{max}$ and a minimum number of state of direct connectivity $X_{min}$,

- determining (740-D) for each identifier $i_{(k)}$ associated with a connected communication device (100-k), from at least a portion of the identifiers $i_{(k)}$, a weight value $\kappa_{(k)}$, the weight value $\kappa_{(k)}$ being determined from the set of the resources $\mathcal{R}(k)$,

- determining (770-D) a weight list comprising weight values $\kappa_{(k)}$ associated with the $\mathcal{K}$ identifiers $i_{(k)}$ of the portion of identifiers $i_{(k)}$, the weight list being ordered in accordance with the selected order, between a maximum weight value $K_{max}$ and a minimum weight value $K_{min}$,

- determining (780-D) a list of priority devices comprising priority devices which are associated with the $\mathcal{K}$ identifiers $i_{(k)}$ of the portion of the identifiers $i_{(k)}$ as a function of the weight list and the list of connections,
- determining (780-D) a supervision device (400) from the list of priority devices.

Figure 1

Figure 2

Figure 3

Figure 4

**Matrice de connectivité élémentaire**

$$\mathcal{T}_{(n)}$$

| Mode de communication | Direct | Relayée |
|---|---|---|
| $i_{(n)}$ | - | $\varepsilon_{r(n)}$ |
| $i_{(n+1)}$ | $\varepsilon_{d(n\leftrightarrow n+1)}$ | $\varepsilon_{r(n+1)}$ |
| $i_{(n+2)}$ | $\varepsilon_{d(n\leftrightarrow n+2)}$ | $\varepsilon_{r(n+2)}$ |
| $i_{(n+3)}$ | $\varepsilon_{d(n\leftrightarrow n+3)}$ | $\varepsilon_{r(n+3)}$ |

Figure 5

**Matrice de connectivité globale**

$$\mathcal{T}$$

| Connexions | $i_{(n)}$ | $i_{(n+1)}$ | $i_{(n+2)}$ | $i_{(n+3)}$ |
|---|---|---|---|---|
| $i_{(n)}$ | $\varepsilon_{r(n)}$ | $\varepsilon_{d(n+1\leftrightarrow n)}$ | $\varepsilon_{d(n+2\leftrightarrow n)}$ | $\varepsilon_{d(n+3\leftrightarrow n)}$ |
| $i_{(n+1)}$ | $\varepsilon_{d(n\leftrightarrow n+1)}$ | $\varepsilon_{r(n+1)}$ | $\varepsilon_{d(n+2\leftrightarrow n+1)}$ | $\varepsilon_{d(n+3\leftrightarrow n+11)}$ |
| $i_{(n+2)}$ | $\varepsilon_{d(n\leftrightarrow n+2)}$ | $\varepsilon_{d(n+1\leftrightarrow n+2)}$ | $\varepsilon_{r(n+2)}$ | $\varepsilon_{d(n+3\leftrightarrow n+2)}$ |
| $i_{(n+3)}$ | $\varepsilon_{d(n\leftrightarrow n+3)}$ | $\varepsilon_{d(n+1\leftrightarrow n+3)}$ | $\varepsilon_{d(n+2\leftrightarrow n+3)}$ | $\varepsilon_{r(n+3)}$ |

Figure 6

| |
|---|
| Déterminer un identifiant $i_{d(n)}$ associé au module de communication direct à partir de l'identifiant unique $i_{r(n)}$ du module de communication relayé du dispositif 100-n |

600-E

| |
|---|
| Acquérir un message $\mathcal{M}_{0(n)}$ |

620-E

| |
|---|
| Convertir le message $\mathcal{M}_{0(n)}$ en un message de communication direct $\mathcal{M}_d$ et en un message de communication relayé $\mathcal{M}_{r(n)}$ |

640-E

| |
|---|
| Déterminer le message identifié de communication direct $\mathcal{M}_{d(n)}$ à partir du message de communication direct $\mathcal{M}_d$ et de l'identifiant déterminé $i_{d(n)}$ |

660-E

| |
|---|
| Emettre de façon synchrone le message identifié de communication direct $\mathcal{M}_{d(n)}$ et le message de communication relayé $\mathcal{M}_{r(n)}$ |

680-E

Figure 7

| |
|---|
| Recevoir un message de communication direct $\mathcal{M}_{d(n+1)}$ (ou un message de communication relayé $\mathcal{M}_{r(n+1)}$) |

620-R

| |
|---|
| Déterminer l'identifiant $i_{d(n+1)}$ (ou $i_{r(n+1)}$) du dispositif 100-(n+1) émettant le message $\mathcal{M}_{d(n+1)}$ (ou $\mathcal{M}_{r(n+1)}$) |

640-R

| |
|---|
| Convertir le message reçu $\mathcal{M}_{d(n+1)}$ (ou $\mathcal{M}_{r(n+1)}$) en un message $\mathcal{M}_t$ à transmettre |

660-R

| |
|---|
| Transmettre le message $\mathcal{M}_t$ associé au dispositif 100-(n+1) |

680-R

## Figure 8

Déterminer une matrice de connectivité élémentaire $\mathcal{T}_{(n)}$ comprenant l'état de connectivité directe $\mathcal{E}_{d(n\leftrightarrow n+1)}$ entre les différents dispositifs 100-(n+1) et le dispositif 100-n   ⟋ 700-n

Recevoir un message de communication direct $\mathcal{M}_{d(n+1)}$   ⟋ **720-n**

Déterminer l'identifiant $i_{(n+1)}$ du dispositif 100-(n+1) émettant le message $\mathcal{M}_{d(n+1)}$   ⟋ **740-n**

Mettre à jour l'état de connectivité directe $\mathcal{E}_{d(n\leftrightarrow n+1)}$ de la matrice de connectivité élémentaire $\mathcal{T}_{(n)}$   ⟋ **750-n**

Déterminer un message de connectivité relayée $\mathcal{M}_{\mathcal{T}(n)}$ à partir de la matrice $\mathcal{T}_{(n)}$ et de l'identifiant $i_{(n)}$   ⟋ **760-n**

Emettre le message de connectivité relayée $\mathcal{M}_{\mathcal{T}(n)}$   ⟋ **780-n**

## Figure 9

Déterminer une table de connectivité globale $\mathcal{T}$ comprenant les états de connectivité directe $\mathcal{E}_{d(n\leftrightarrow n+1)}, \mathcal{E}_{d(n+1\leftrightarrow n)}$ entre les différents dispositifs 100-(n+1) et 100-n, et leurs états de connectivité relayée $\mathcal{E}_{r(n)}, \mathcal{E}_{r(n+1)}$   ⟋ 700-S

Recevoir un message de connectivité relayée $\mathcal{M}_{\mathcal{T}(n)}$   ⟋ **720-S**

Déterminer l'identifiant $i_{(n)}$ du dispositif 100-n émettant le message $\mathcal{M}_{\mathcal{T}(n)}$   ⟋ **740-S**

Mettre à jour la matrice de connectivité globale $\mathcal{T}$   ⟋ **750-S**

Déterminer une liste de contrôle comprenant l'ensemble des $i_{(h)}$ des dispositifs « hors ligne » 100-h   ⟋ 800-S

Figure 10

Déterminer une liste initiale comprenant $\mathcal{K}$ identifiants $i_{(k)}$ connecté au réseau 200 parmi l'ensemble des $\mathcal{N}$ identifiants $i_{(n)}$ à partir de la matrice de connectivité globale $\mathcal{T}$   **700-D**

Déterminer pour chaque identifiants $i_{(k)}$, le nombre $\chi_{d(k)}$ d'état de connectivité directe $\mathcal{E}_{d(k \leftrightarrow h)}$ associés aux $\mathcal{H}$ identifiants $i_{(h)}$ à partir de la matrice de connectivité globale $\mathcal{T}$   **710-D**

Déterminer une liste de connexions ordonnant les $\mathcal{K}$ identifiants $i_{(k)}$ en fonction des nombres $\chi_{d(k)}$ : du plus grand $\mathcal{X}_{max}$ au plus petit $\mathcal{X}_{min}$   **720-D**

Envoyer une requête d'informations sur les ressources des dispositif 100-k via le réseau d'interconnexion 200   730-D

Recevoir $\mathcal{K}$ messages réponse $\mathcal{M}_{\mathcal{R}(k)}$ à la requête, chaque message comprenant le poids $\kappa_{(k)}$ pour chaque identifiants $i_{(k)}$, le poids $\kappa_{(k)}$ étant défini à partir des ressources   740-D

Déterminer une liste de poids ordonnant les $\mathcal{K}$ identifiants $i_{(k)}$ (ou une partie) en fonction des poids $\kappa_{(k)}$ : du plus grand $K_{max}$ au plus petit $K_{min}$   **770-D**

Déterminer une liste de dispositifs prioritaires ordonnant les $\mathcal{K}$ identifiants $i_{(k)}$ (ou une partie) en fonction de la liste de poids et de la liste de connexions   **780-D**

Déterminer le dispositif de supervision 400 à partir de la liste de dispositifs prioritaires   **790-D**

Figure 11

**800** — Perte de connexion au réseau 200 d'un dispositif

**820-S** — Mettre à jour la liste de contrôle
(i.e. ajouter le dispositif 100-h avec l'identifiant unique $i_{(h)}$)

Equipement
de supervision 400

**840-S** — Réglage de l'horloge de supervision à $\tau = 0$

**850-S** — Message de communication direct reçu — oui — $\mathcal{M}_{d(h)}$ ou $\mathcal{M}_{s(h)}$

non

**860-S** — Horloge à $\tau = \tau_s$

non

oui

**880-S** — Emettre un message de supervision $\mathcal{M}_{(400)}$ par communication direct

Figure 12

Recevoir un message de communication direct $\mathcal{M}_{d(h)}$ d'un dispositif 100-h non connecté au réseau 200 — **920**

Déterminer l'identifiant $i_{(h)}$ du dispositif 100-h émettant le message $\mathcal{M}_{d(h)}$ — **940**

Déterminer le message à répéter de communication direct $\mathcal{M}_{r(400)}^{(n)}$ à partir du message $\mathcal{M}_{d(h)}$, de l'identifiant unique $i_{(400)}$ de l'équipement de supervision 400 et de l'identifiant unique $i_{(h)}$ du dispositif 100-h — **960**

Emettre le message à répéter de communication direct $\mathcal{M}_{r(400)}^{(n)}$ via le module de communication relayé 1080 — **980**

**EP 4 336 961 B1**

## RÉFÉRENCES CITÉES DANS LA DESCRIPTION

**Documents brevets cités dans la description**

- EP 2904874 B1